# EUROPEAN PATENT SPECIFICATION

(11) **EP 4 742 068 B1**
(45) Date of publication and mention of the grant of the patent: **21.10.2026**
(21) Application number: 25210436.9
(22) Date of filing: 22.10.2025
(51) Int. Cl.: G06F 21/44, G06F 21/78, G06F 21/31, G06F 21/45

(54) **PROCESSING SYSTEM, RELATED INTEGRATED CIRCUIT, DEVICE AND METHOD**
VERARBEITUNGSSYSTEM, ZUGEHÖRIGE INTEGRIERTE SCHALTUNG, VORRICHTUNG UND VERFAHREN
SYSTÈME DE TRAITEMENT, CIRCUIT INTÉGRÉ ASSOCIÉ, DISPOSITIF ET PROCÉDÉ

(30) Priority: 06.11.2024 IT 202400024948
(43) Date of publication of application: 13.05.2026
(73) Proprietor: STMicroelectronics International N.V., 1228 Plan-les-Ouates, Geneva (CH)
(72) Inventor: MARTORANA, Rosario, I-95129 Catania (IT); COLOMBO, Roberto, D-81829 München (DE); CUTULI, Francesca Maria Grazia, 95030 Catania (IT)
(74) Representative: Buzzi, Notaro & Antonielli d'Oulx S.p.A.

(56) References cited:
- EP-A1- 3 432 190
- EP-A1- 4 187 415
- US-A1- 2013 019 305
- US-A1- 20240 346 130
- US-B2- 10 740 041

## Description

### Technical Field

Embodiments of the present disclosure relate to processing systems, in particular solutions for updating a password of the processing system.

### Background

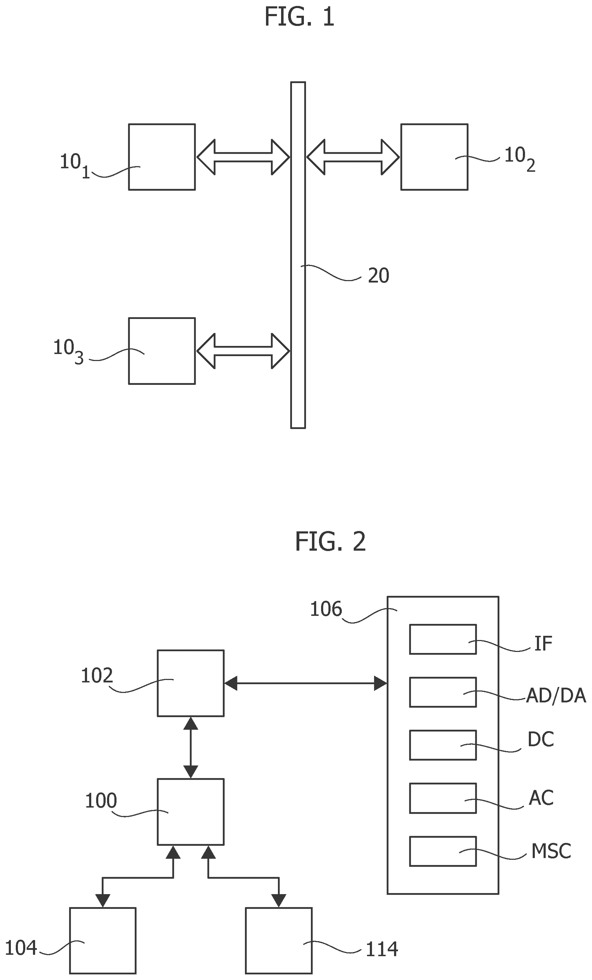

Figure 1 shows a typical electronic system, such as the electronic system of a vehicle, comprising a plurality of processing systems 10, such as embedded systems or integrated circuits, e.g., a Field Programmable Gate Array (FPGA), a Digital Signal Processor (DSP) or a micro-controller (e.g., dedicated to the automotive market).

For example, in Figure 1 are shown three processing systems 10₁, 10₂ and 10₃ connected through a suitable communication system 20. For example, the communication system may include a vehicle control bus, such as a Controller Area Network (CAN) bus, and possibly a multimedia bus, such as a Media Oriented Systems Transport (MOST) bus, connected to vehicle control bus via a gateway. Typically, the processing systems 10 are located at different positions of the vehicle and may include, e.g., an Engine Control Unit, a Transmission Control Unit (TCU), an Anti-lock Braking System (ABS), a Body Control Module (BCM), and/or a navigation and/or multimedia audio system. Accordingly, one or more of the processing systems 10 may also implement real-time control and regulation functions. These processing systems are usually identified as Electronic Control Units.

Figure 2 shows a block diagram of an exemplary digital processing system 10, such as a micro-controller, which may be used as any of the processing systems 10 of Figure 1.

In the example considered, the processing system 10 comprises a microprocessor 102, usually the Central Processing Unit (CPU), programmed via software instructions. Usually, the software executed by the microprocessor 102 is stored in a non-volatile program memory 104, such as a Flash memory or EEPROM. Thus, the memory 104 is configured to store the firmware of the processing unit 102, wherein the firmware includes the software instructions to be executed by the microprocessor 102. Generally, the non-volatile memory 104 may also be used to store other data, such as configuration data, e.g., calibration data.

The microprocessor 102 usually has associated also a volatile memory 104b, such as a Random-Access-Memory (RAM). For example, the memory 104b may be used to store temporary data.

As shown in Figure 2, usually the communication with the memories 104 and/or 104b is performed via one or more memory controllers 100. The memory controller(s) 100 may be integrated in the microprocessor 102 or connected to the microprocessor 102 via a communication channel, such as a system bus of the processing system 10. Similarly, the memories 104 and/or 104b may be integrated with the microprocessor 102 in a single integrated circuit, or the memories 104 and/or 104b may be in the form of a separate integrated circuit and connected to the microprocessor 102, e.g., via the traces of a printed circuit board.

In the example considered, the microprocessor 102 may have associated one or more (hardware) resources/peripherals 106 selected from the group of:
- one or more communication interfaces IF, e.g., for exchanging data via the communication system 20, such as a Universal asynchronous receiver/transmitter (UART), Serial Peripheral Interface Bus (SPI), Inter-Integrated Circuit (I²C), Controller Area Network (CAN) bus, and/or Ethernet interface, and/or a debug interface; and/or
- one or more analog-to-digital converters AD and/or digital-to-analog converters DA; and/or
- one or more dedicated digital components DC, such as hardware timers and/or counters, or a cryptographic co-processor; and/or
- one or more analog components AC, such as comparators, sensors, such as a temperature sensor, etc.; and/or
- one or more mixed signal components MSC, such as a PWM (Pulse-Width Modulation) driver.

Generally, a dedicated digital components DC may also correspond to a FPGA integrated in the processing system 10. For example, in this case, the memory 104 may also comprise the program data for such a FPGA.

Accordingly, the digital processing system 10 may support different functionalities. For example, the behavior of the microprocessor 102 is determined by the firmware stored in the memory 104, e.g., the software instructions to be executed by a microprocessor 102 of a micro-controller 10. Thus, by installing a different firmware, the same hardware (micro-controller) can be used for different applications.

In this respect, future generation of such processing systems 10, *e.g.,* microcontrollers adapted to be used in automotive applications, are expected to exhibit an increase in complexity, mainly due to the increasing number of requested functionalities (new protocols, new features, etc.) and to the tight constraints of execution conditions (e.g., lower power consumption, increased calculation power and speed, etc.).

For example, recently more complex multi-core processing systems 10 have been proposed. For example, such multi-core processing systems may be used to execute (in parallel) several of the processing systems 10 shown in Figure 1, such as several ECUs of a vehicle.

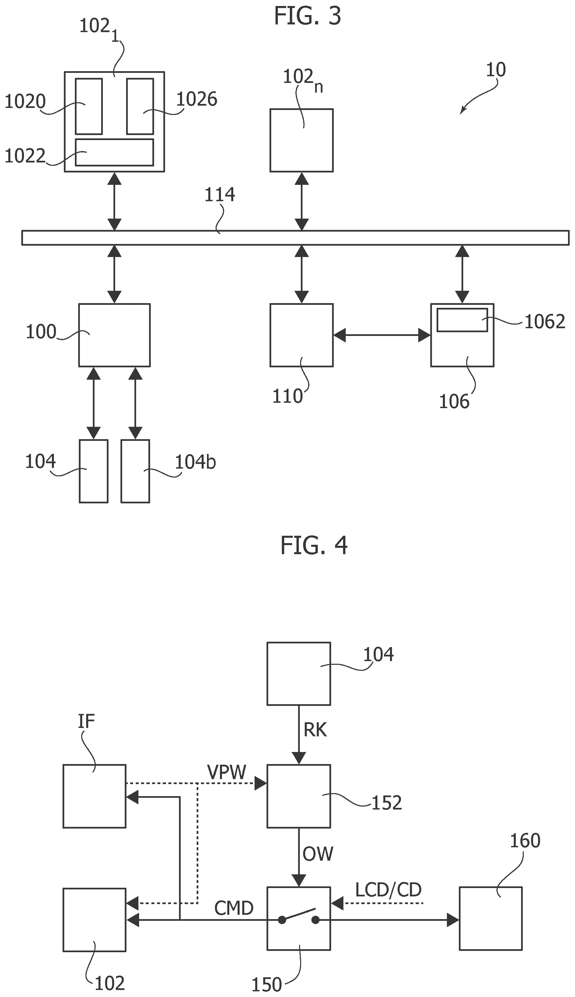

Figure 3 shows an example of a multi-core processing system 10. Specifically, in the example considered, the processing system 10 comprises a plurality of n processing cores 102₁...102ₙ connected to a (on-chip) communication system 114. For example, in the context of real-time control systems, the processing cores 102₁...102ₙ may be ARM Cortex^{®}-R52 cores. Generally, the communication system 114 may comprise one or more bus systems, e.g., based on the Advanced eXtensible Interface (AXI) bus architecture, and/or a Network-on-Chip (NoC).

For example, as shown at the example of the processing core 102₁, each processing core 102 may comprise a microprocessor 1020 and a communication interface 1022 configured to manage the communication between the microprocessor 1020 and the communication system 114. Typically, the interface 1022 is a master interface configured to forward a given (read or write) request from the microprocessor 1020 to the communication system 114, and forward an optional response from the communication system 114 to the microprocessor 1020. However, the communication interface 1022 may also comprise a slave interface. For example, in this way, a first microprocessor 1020 may send a request to a second microprocessor 1020 (via the communication interface 1022 of the first microprocessor, the communication system 114 and the communication interface 1022 of the second microprocessor).

Generally, each processing core 102₁...102ₙ may also comprise further local resources, such as one or more local memories 1026, usually identified as Tightly Coupled Memory (TCM).

As mentioned before, typically the processing cores 102₁...102ₙ are arranged to exchange data with a non-volatile memory 104 and/or a volatile memory 104b. In a multi-core processing system 10, often these memories are system memories, *i.e.,* shared for the processing cores 102₁...102ₙ. As mentioned before, each processing core 102₁...102ₙ may, however, comprise one or more additional local memories 1026.

For example, as shown in Figure 3, the processing system 10 may comprise one or more memory controllers 100 configured to connect at least one non-volatile memory 104 and at least one volatile memory 104b to the communication system 114. As mentioned before, one or more of the memories 104 and/or 104b may be integrated in the integrated circuit of the processing system 10 or connected externally to the integrated circuit.

As mentioned before, the processing system 10 may comprise one or more resources 106, such as one or more communication interfaces or co-processors (e.g., a cryptographic co-processor). The resources 106 are usually connected to the communication system 114 via a respective communication interface 1062. In general, the communication interface 1062 comprises at least a slave interface. For example, in this way, a processing core 102 may send a request to a resource 106 and the resource returns given data. Generally, one or more of the communication interfaces 1062 may also comprise a respective master interface. For example, such a master interface may be useful in case the resource has to start a communication in order to exchange data via (read and/or write) request with another circuit connected to the communication system 114, such as a resource 106 or a processing core 102. For example, for this purpose, the communication system 114 may indeed comprise an Advanced Microcontroller Bus Architecture (AMBA) High-performance Bus (AHB), and an Advanced Peripheral Bus (APB) used to connect the resources/peripherals 106 to the AMBA AHB bus.

Often such processing systems 10 comprise also one or more Direct Memory Access (DMA) controllers 110. For example, as shown in Figure 3, a DMA controller 110 may be used to directly exchange data with a memory, e.g., the memory 104b, based on requests received from a resource 106. For example, in this way, a communication interface IF may directly read data (via the DMA controller 110) from the memory 104b and transmit these data, without having to exchange further data with a processing unit 102. Generally, a DMA controller 110 may communicate with the memory or memories via the communication system 114 or via one or more dedicated communication channels.

Thus, modern processing systems 10 may comprise a significant number of circuits and functionalities. This also implies that the security framework of such processing systems 10 becomes also more and more complex, which determines an increase of the time and complexity of the testing phase. Usually, the security framework is based on the concept of resource protection, i.e., given a set of resources, the framework is designed such that the access to one or more resources may be selectively blocked or granted based on specific conditions. For example, one of these conditions may be based on a password, i.e. access to the resource is blocked until the correct password is provided.

For example, possible solutions for resource protections are disclosed in United States Patent US 10,949,570 B2 or EP 3 432 190 A1. For example, as shown in Figure 4, one or more of the circuits 160 of the processing system 10 may have associated a protection circuit 150 configured to control access to the respective circuit 160, such as a memory controller 100, a processing circuit 102 and/or a resource/peripheral 106.

For example, respective access requests CMD may be received from another circuit of the processing system 10 such as the processing circuit 102 or a communication interface IF, such as a debug interface, etc. For example, often the protection circuits 150 are configured to control the access to one or more internal circuits 160 of the processing system 10 via an external debug tool, or the possibility to perform a write (or similarly a read) access to specific memory areas, such as memory areas of the non-volatile memory 104. For example, the use of the debug interface, such as a JTAG (Joint Test Action Group) interface, may be deactivated by interrupting (via the protection circuit 150) the connection of the internal debug interface to the pins to which an external debugger may be connected. Accordingly, in this way, the debug interface will not respond to external requests provided to the respective pins.

Generally, while some circuits 160 may possibly not have any access restrictions at all, the access to other circuits 160 may be blocked (i.e. the protection may be activated) by default or selectively as a function of configuration data. For example, as also described in United States Patents US 10,740,041 B2 and US 10,922,015 B2, the protections of a given circuit 160 may be activated selectively as a function of a life-cycle stage of the processing system 10 as indicated by life-cycle data LCD. For example, the life-cycle data LCD may correspond to a bit sequence, which may indicate one of the following stages:
- "production" (LC0), when the processing system 10, e.g., a micro-controller, is in the chip fabric;
- "customer delivery" (LC1), when the processing system 10 has been shipped to the 1st tier customer (e.g., a producer of an engine control unit);
- "OEM production" (LC2), when the device has been shipped to a next-level customer (e.g., a car maker);
- "in field" (LC3), when the device is installed in the final product (e.g., in a car sold in the market);
- "failure analysis" (LC4), when the device is shipped back to producer of the processing system 10 or the software developer for diagnostic purposes.

Typically, the life-cycle data LCD are written such that once a certain stage is reached, it is not possible to revert them back to a previous stage, i.e., the life-cycle can only advance. For example, this may be implemented with a one-hot encoding in which a fuse is burned each time a given stage has been reached. For example, the advancing of the life-cycle to the next stage may be done by the entity who owns the device in the current life-cycle stage (e.g., chip producer will advance the life-cycle when it is shipped to the customer delivery stage; the 1st tier customer will advance the life-cycle when it is shipped to the OEM production stage, etc.). For example, in this case, each protection 150 of the processing system 10 may be in one of the following states:
a) the life-cycle data LCD indicate that the protection is disabled independently of the configuration data CD (e.g., in stage LC0 or LC4);
b) the life-cycle data LCD indicate that the protection may be enabled selectively and the configuration data CD indicate that the protections is disabled (e.g., in stages LC1 and LC2);
c) the life-cycle data LCD indicate that the protection may be enabled selectively and the configuration data CD indicate that the protections is enabled (e.g., in stages LC1 and LC2); or
d) the life-cycle data LCD indicate that the protection is enabled independently of the configuration data CD (e.g., stage LC3).

Accordingly, in order to grant access to a protected circuit 160, the processing system 10 may comprise a password verification circuit 152 configured to overwrite one or more of the protections 150 when a specific password is provided. Generally, some protections 150, once activated, may also not be deactivated anymore, or a given password may only deactivate a given sub-set of protections.

In the example considered, at least one reference password/keyword RK is stored in some way in the processing system 10. For example, the reference password RK may be hardwired or stored in a non-volatile memory 104 of the processing system 10. In this case, the processing system 10 is usually configured to limit read access to the memory area containing the reference password RK in order to ensure that the reference password RK is kept secret. For example, possible solutions for storing a reference keyword in a non-volatile memory are described in the above cited patents.

Accordingly, in order to deactivate at least one protection 150, a user should be able to provide a password verification command VPW comprising a password/keyword K to the password verification circuit 152. For example, in the example considered, the user may provide the password K to the password verification circuit 152 via software instructions executed by the processing circuit 102 of the processing system 10 and/or via a communication interface IF of the processing system 10, such as via a CAN interface or a (e.g., JTAG) debug interface connected to an external debugger.

For example, the circuits 160, the password verification circuit 152, and the interface IF and/or the processing circuit 102 may be connected through the communication system 114. In this case, the command CMD and the password verification command VPW may be transmitted over the same communication system 114, specifying as target address either the address of a circuit 160 (for a command CMD) or the password verification circuit 152 (for a password verification command VPW).

Accordingly, once the password verification circuit 152 has received the password verification command VPW comprising the password K, the password verification circuit 152 may obtain the reference password RK and compare the password K with the reference password RK and, in response to determining that the two passwords match, the password verification circuit 152 may generate an overwrite signal OW, which is sent to one or more protection circuits 150. Accordingly, in response to the overwrite signal OW, the protection circuit(s) 150 may deactivate at least part of the respective protection.

However, this may imply that also the communication between the password management circuit 150 and the memory controller 100 of the memory 104 is transmitted via the communication system 114, possibly creating a security risk, because the reference password RK could be obtained by monitoring the transactions exchanged via the communication system 114.

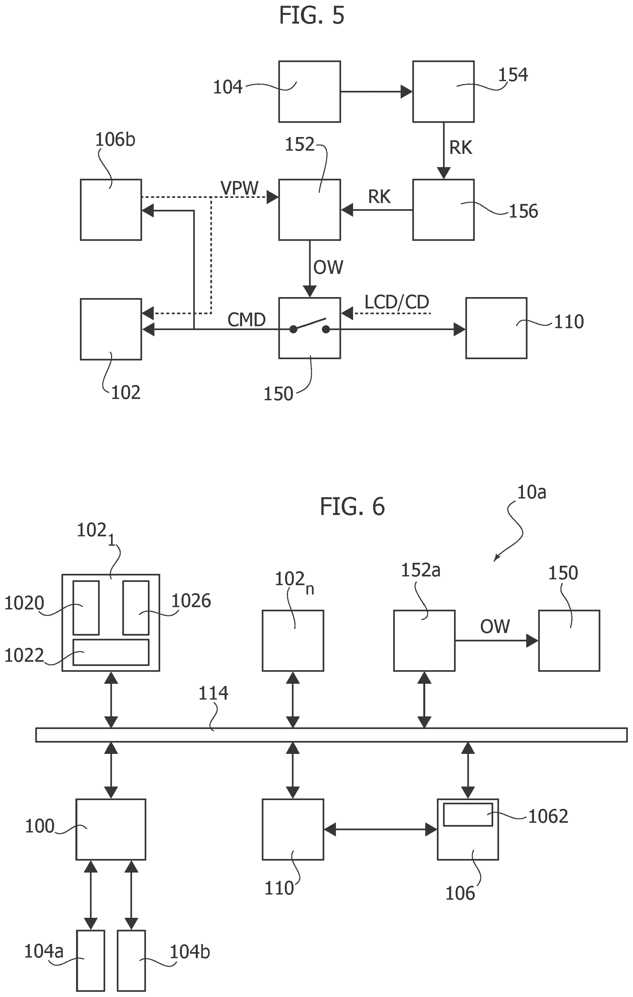

Figure 5 shows a modified security architecture. Specifically, compared to Figure 4, the processing system 10 comprises moreover a password upload circuit 154 and a temporary password repository 156. Accordingly, in the example considered, the password verification circuit 152 does not access dynamically the original reference password(s) RK, which are stored in the non-volatile memory 104. Conversely, the password upload circuit 154 reads the reference password(s) RK once and stores the reference password(s) RK in the temporary password repository 156, which is implemented either with registers or with a RAM, which may only be read by the password verification circuit 152. Accordingly, the password verification circuit 152 may compare the received password K with a reference password RK stored in the temporary password repository 156, wherein the read path between the password verification circuit 152 and the temporary password repository 156 is not shared with other circuits of the processing system 10.

In many known processing circuits 10 the one or more reference passwords RK are static. However, this implies that, if a reference password RK is compromised, the situation cannot be recovered and the device becomes unusable in terms of security. Accordingly, processing systems 10 are known, which permit to update one or more of the reference passwords RK stored to the non-volatile memory 104. For example, the password change request may require that a user provides the current (old) value of the password and the new value for the password RK. For example, a user may send a password verification command VPW with the current (old) password in order to unlock the memory area of the memory 104 used to store the one or more reference passwords RK, and then a command CMD used to reprogram/update a reference passwords RK. Another solution for updating a password is disclosed in United States Patent Application Publication US 2024/346130 A1.

However, when the system is used by different users, not all users may have knowledge of the new reference password RK. For example, a producer of a car manufacturer may change the reference password RK, without communicating the new password to the engine control unit producer. For example, in this case, the engine control unit producer may have difficulties to analyze the engine control unit.

### Summary

In view of the above, it is an objective of various embodiments of the present disclosure to provide solutions for updating one or more passwords of a processing system.

According to one or more embodiments, one or more of the above obj ectives is achieved by means of a processing system having the features specifically set forth in the claims that follow. Embodiments moreover concern a related integrated circuit, device and method.

The scope of protection is defined in the enclosed claims, which are an integral part of the technical teaching of the disclosure provided herein.

As mentioned before, various embodiments of the present disclosure relate to a processing system. The processing system comprises a non-volatile memory comprising a memory area arranged to store password data, a password verification circuit and a protection circuit managing access to the non-volatile memory, e.g., in order to update the password data. Specifically, in various embodiments, the memory area comprise a first memory slot arranged to store a first master password, a second memory slot arranged to store a second master password and a third memory slot arranged to store a security password. The memory area may comprise further slots for storing further master passwords and/or further security passwords.

In various embodiments, the password verification circuit is configured to receive a password verification command comprising a password and a slot number. Moreover, the password verification circuit is configured determine whether the slot number is associated with the first master password or the second master password. Specifically, in response to determining that the slot number is associated with the first master password, the password verification circuit determines whether the received password corresponds to the first master password and, in response to determining that the received password corresponds to the first master password, sets an overwrite signal to indicate a success verification of the first master password. Conversely, in response to determining that the slot number is associated with the second master password, the password verification circuit determines whether the received password corresponds to the second master password and, in response to determining that the received password corresponds to the second master password, sets the overwrite signal to indicate a success verification of the second master password.

For example, the overwrite signal may comprise a first signal and a second signal, and the password verification circuit may be configured to assert the first signal to indicate a success verification of the first master password and de-assert the first signal to not indicate a success verification of the first master password, and assert the second signal to indicate a success verification of the second master password and de-assert the second signal to not indicate a success verification of the second master password.

Similarly, in various embodiments, the password verification circuit may be configured to determine whether the slot number is associated with the security password. Accordingly, in response to determining that the slot number is associated with the security password, the password verification circuit may determine whether the received password corresponds to the security password and, in response to determining that the received password corresponds to the security password, set the overwrite signal to indicate a success verification of the security password.

For example, in order to implement a password verification operation, the processing system may also comprise a password repository and a configuration circuit configured to transfer the password data from the non-volatile memory to the password repository. Accordingly, in this case, the password verification circuit may be configured to provide the slot number to the password repository and receive a respective password associated with the slot number from the password repository.

In various embodiments, the security password may be used to selectively disable one or more protections. For example, in this case, the processing system may comprise a circuit and a further protection circuit, wherein the further protection circuit is configured to enable access to the circuit in response to determining that the overwrite signal indicates a success verification of the security password.

Conversely, in various embodiments, the master passwords may be used to selectively enable (at least) write access to the security password. Accordingly, in various embodiments, the protection circuit is configured to receive a write request for writing a new security password to the third memory slot arranged to store the security password. For this purpose, the processing system may comprise a processing circuit, such as a microprocessor, and/or a communication interface configured to provide the password verification command and the write request.

In various embodiments, in a first operating mode, such as an in-field life-cycle stage, the protection circuit determines whether security access data indicate that the third memory slot is associated with the first master password or with the second master password. For example, the protection circuit may be configured to determine the operating mode as a function of life-cycle data indicating a life-cycle stage of the processing system and/or configuration data.

For example, in order to manage the security access data, the protection circuit may comprise a register providing the security access data, wherein a field of the security access data indicates whether the third memory slot arranged to store the security password is associated with the first master password, is associated with the second master password or is unassigned. Specifically, in various embodiments, the protection circuit just permits a single programming operation of the field of the security access data, even when a configuration circuit of the processing system requests plural programming operations of the field. For this purpose, the protection circuit may be configured to receive configuration data from the configuration circuit, and determine whether the field of the security access data indicates that the third memory slot is (still) unassigned. Accordingly, in response to determining that the field of the security access data indicates that the third memory slot is unassigned, the protection circuit may overwrite the bits of the field of the security access data with respective bits of the received configuration data. Otherwise, the protection circuit may inhibit the writing of the field of the security access data.

For example, in order to receive the configuration data from the configuration circuit, the protection circuit may have associated an address, wherein the non-volatile memory comprises a further memory area arranged to store frames of configuration data, each frame of configuration data comprising an address and respective configuration data. Accordingly, in this case, the configuration circuit may be configured to sequentially read the frames of configuration data from the non-volatile memory, determine whether the address of a frame of configuration data corresponds to the address associated with the protection circuit and, in response to determining that the address of the frame of configuration data corresponds to the address associated with the protection circuit, transmit the configuration data of the frame of configuration data to the protection circuit.

Moreover, in various embodiments, the protection circuit determines whether the overwrite signal indicates a success verification of the first master password or the second master password. Accordingly, in response to determining that the security access data indicate that the third memory slot is associated with the first master password and the overwrite signal indicates a success verification of the first master password, the protection circuit enables the writing of the new security password to the third memory slot. Conversely, in response to determining that the security access data indicate that the third memory slot is associated with the first master password and the overwrite signal does not indicate a success verification of the first master password, the protection circuit blocks the write access, i.e., inhibits the writing of the new security password to the third memory slot. Similarly, in response to determining that the security access data indicate that the third memory slot is associated with the second master password and the overwrite signal indicates a success verification of the second master password, the protection circuit may enable the writing of the new security password to the third memory slot arranged to store the security password.

In various embodiments, the protection circuit may also selectively enable an update of a master password. For example, in various embodiments, the protection circuit is configured to receive a write request for writing a new master password to the first memory slot arranged to store the first master password. For example, in the first operating mode, e.g., the in-field life-cycle stage, the protection circuit may determine whether the overwrite signal indicates a success verification of the first master password. Next, in response to determining that the overwrite signal indicates a success verification of the first master password, the protection circuit may enable the writing of the new master password to the first memory slot. Conversely, in response to determining that the overwrite signal does not indicate a success verification of the first master password, the protection circuit may inhibit the writing of the new master password to the first memory slot.

In various embodiments, the protection circuit may also support further operating modes. For example, in a second operating mode, such as a production life-cycle stage, the protection circuit may enable the writing of the first master password and the security password, i.e., without requiring a password verification.

Conversely, in various embodiments, in a third operating mode, such as a software development life-cycle stage, the protection circuit may be configured to determine whether the security access data indicate that the third memory slot is (already) associated with the first master password, is associated with the second master password or is unassigned. Moreover, the protection circuit may determine whether the overwrite signal indicates a success verification of the first master password or the second master password. Specifically, in response to determining that the security access data indicate that the third memory slot is associated with the second master password or is unassigned, the protection circuit may enable the writing of the new security password to the third memory slot. Moreover, in response to determining that the security access data indicate that the third memory slot is associated with the first master password and the overwrite signal indicates a success verification of the first master password, the protection circuit may enable the writing of the new security password to the third memory slot. Conversely, in response to determining that the security access data indicate that the third memory slot is associated with the first master password and the overwrite signal does not indicate a success verification of the first master password, the protection circuit may inhibit the writing of the new security password to the third memory slot.

### Brief description of the figures

Embodiments of the present disclosure will now be described with reference to the annexed drawings, which are provided purely by way of non-limiting example and in which:
- Figure 1 shows an example of an electronic system comprising a plurality of processing systems;
- Figures 2 and 3 show examples of processing systems;
- Figures 4 and 5 show examples of a processing system comprising a protection circuit and a password verification circuit;
- Figure 6 shows an embodiment of a processing system according to the present disclosure;
- Figure 7 shows an embodiment of a password verification circuit according to the present disclosure;
- Figures 8A and 8B show an embodiment of a password verification command;
- Figure 9 shows an embodiment of a configuration circuit configured to read password data and configuration data from a non-volatile memory;
- Figure 10 shows an embodiment of a non-volatile memory arranged to store password data, wherein the non-volatile memory has associated a protection circuit;
- Figure 11 shows a further embodiment of the non-volatile memory arranged to store password data;
- Figure 12 shows an embodiment of a processing system configured to update the password data stored to the non-volatile memory of Figure 11;
- Figure 13 show an embodiment of security password control data;
- Figure 14 shows a first part of a protection circuit for the non-volatile memory of Figure 11;
- Figure 15 shows a second part of a protection circuit for the non-volatile memory of Figure 11; and
- Figure 16 show a further embodiment of a password verification command.

### Detailed Description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The references provided herein are for convenience only and do not interpret the scope or meaning of the embodiments.

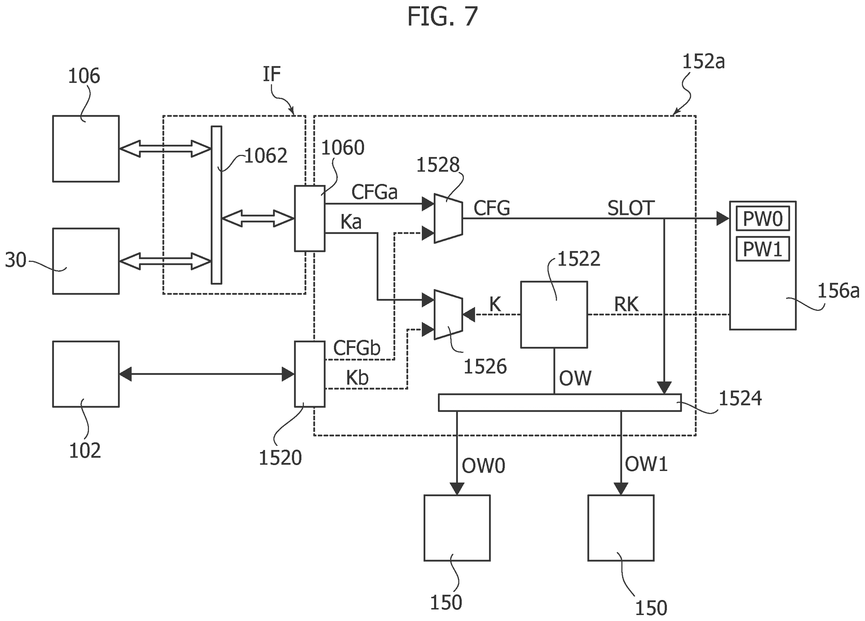

In the following Figures 7 to 16 parts, elements or components which have already been described with reference to Figures 1 to 6 are denoted by the same references previously used in such Figure; the description of such previously described elements will not be repeated in the following in order not to overburden the present detailed description.

As mentioned before, the present disclosure relates to solutions for updating one or more reference passwords of a processing system.

Figure 6 shows a processing system 10a according to the present disclosure. Specifically, the processing system 10a comprises at least one processing circuit 102, e.g., comprising a microprocessor 1020, a memory controller 100 for interfacing a non-volatile memory 104a and a password verification circuit 152a. In various embodiments, the processing core 102, the password verification circuit 152a and optionally the memory controller 100 are connected through a communication system 114. The processing system 10a may also comprise further circuits, such as one or more peripherals 106 and/or a DMA controller 110, etc. As described in the foregoing, one or more of the circuits 160 of the processing system 10a may have associated (e.g., comprise) a respective protection circuit 150 configured to control access to the respective circuit 160, such as a processing circuit 102, a memory controller 100 or a peripheral 106, e.g., as a function of life-cycle data LCD and/or configuration data CD. Specifically, in various embodiments, the password verification circuit 152a is configured to generate one or more overwrite signals OW, wherein one or more of the protection circuits 150 are configured to disable the respective protection as a function of the one or more overwrite signals OW. For a general description of these circuits, reference is made to the description of Figures 1 to 5.

Figure 7 shows an embodiment of the password verification circuit 152a. In the embodiment considered, the password verification circuit 152a is connected (e.g., directly) to a password repository 156a for receiving a reference password RK to be used for a password verification operation. In various embodiments, the password repository 156a comprises a plurality of slots PW0, PW1, etc. for storing a plurality of reference passwords RK.

In various embodiments, the password repository 156a may directly correspond to dedicate memory slots in the non-volatile memory 104a (see, e.g., the disclosure of Figure 4). Conversely, in other embodiments, the password repository 156a is a temporary password repository (see, e.g., the disclosure of Figure 5), e.g., implemented with a RAM and/or registers. In the latter case, one or more reference password(s) RK are stored in (e.g., dedicated areas of) the non-volatile memory 104a of the processing system 10a, and the reference password(s) RK are transferred from the memory 104a to the temporary password repository 156a during a configuration phase of the processing system 10a. In both cases, the reference password(s) RK are already loaded into the password repository 156, when the processing unit 102 is activated.

In various embodiments, the password verification circuit 152a comprises at least one interface for receiving a password K to be verified. For example, as mentioned before, the password verification circuit 152a may receive a password verification command VPW comprising a password K from the processing unit 102 of the processing system 10a. Accordingly, in order to receive data from the processing circuit 102, the password verification circuit 152a may comprise an interface 1520. For example, in various embodiments, the processing circuit 102 comprises a microprocessor 1020 and the interface 1520 comprises one or more register addressable by the processing unit 102. For example, the interface 1520 may be a slave interface connected to the communication system 114, e.g., via a peripheral bridge. Accordingly, in various embodiments, the processing circuit 102 may provide data to the password verification circuit 152a by writing the content of the registers 1520 via software instructions.

Additionally or alternatively, the password verification circuit 152a may receive data via a communication interface IF, e.g., from another peripheral 106 of the processing system 10a or an external processing unit 30. For example, in the embodiment considered the interface IF may be a debug interface, such as a JTAG interface, connected to an external debugger 30. In various embodiments, the (e.g. debug) interface IF may indeed be split into a plurality of sub-interfaces connected through a bus 1062, wherein each sub-interface is associated with a respective circuit of the processing system 10a to be controlled via the (e.g. debug) interface. For example, this is exemplified in Figure 7 by the interface 1060, which may only manage the debug commands addressed to the password verification circuit 152a.

In various embodiments, the interface 1520 and/or 1060 may thus provide a password verification command VPW including a password K to be verified. For example, this is schematically shown in Figure 7, wherein the interface 1060 may provide a password Ka and the interface 1520 may provide a password Kb. In the embodiment considered, these passwords Ka and Kb are then provided to a multiplexer 1526 configured to select either the password Ka or Kb (based on whether the interface 1060 or 1520 is used).

Generally, the interfaces 1520 and 1060 have the same basic functionality, i.e., provide a password K to the password verification circuit 152a. Thus, in principle, also a single interface may be used, e.g., in case the bus 1062 corresponds to the communication system 114. However, the inventors have observed that it is usually preferable to have two separate interfaces. In fact, as mentioned before, the interface 1520 may be a register interface specifically adapted to interface the communication system 114, in particular the processing unit 102. Conversely, the interface 1060 may be part of debug interface IF, such as a JTAG interface. In fact, in this case, various blocks of the processing system may have associated debug interfaces, which may also be connected through a debug bus 1062. Accordingly, a certain protection mechanism could be removed by providing a proper password through this debug interface (in case at least the portion 1060 of the debug interface associated with the password verification circuit 152a is not deactivated).

For example, in this way, a protection circuit 150 could be configured to deactivate the debug interface of the processing circuit 102, e.g., based on the life-cycle data LCD and/or the configuration data CD. Specifically, also the debug interface of the processing unit 102 may be connected to the bus 1062. Next an external debugger 30 could be used to provide a password K to the debug interface 1060 of the password verification circuit 152a and the password verification circuit 152a may generate the signal OW (or similarly one or more signals OW0, OW1, etc.), which is sent to the protection circuit 150 associated with the debug interface of the processing circuit 102. In response to the signal OW, the protection circuit 150 may then re-activate the debug interface of the processing circuit 102, and a developer may use the external debugger 30 to analyze the processing circuit 102.

Specifically, in various embodiments the password repository 156a comprises a plurality of slots PW0, PW1,.... In this case, the password verification command VPW may include, and similarly the interfaces 1520 and/or 1060 may provide, additional password configuration data CFG associated with the respective password K to be verified. For example, the interface 1060 may provide password configuration information CFGa and the interface 1520 may provide password configuration information CFGb. In the embodiment considered, the respective password configuration information CFGa and CFGb are then provided to a multiplexer 1528 configured to select either the additional password configuration data CFGa or CFGb (based on whether the interface 1060 or 1520 is used).

For example, the additional password configuration data CFG may contain a slot number SLOT indicating the slot PW0, PW1, ... of a reference password RK in the password repository 156a to be used for the verification. Accordingly, the password repository 156a may provide the respective reference password RK stored in the slot PW0, PW1, ... indicated by the slot number SLOT.

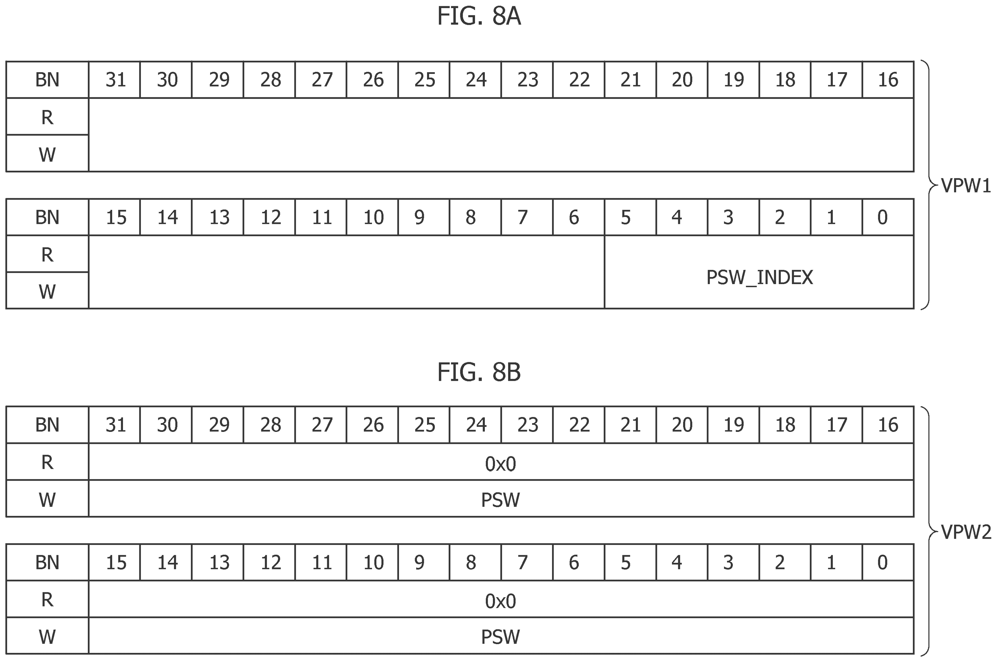

For example, Figures 8A and 8B show and embodiment of the password verification command VPW. Specifically, in the embodiment considered, the interface 1520 comprises a first register having associated a first address for storing the configuration data CFGb and a second register having associated a second address for storing the password Kb. Similarly, the interface 1060 may comprise a first register having associated a first address for storing the configuration data CFGa and a second register having associated a second address for storing the password Ka.

Accordingly, in various embodiments, the configuration data CFG may be programmed by sending a first command VPW1 to the interface 1520 or 1060, wherein the first command VPW1 comprises the respective first address. For example, Figure 8A shows an embodiment of the data of the first command VPW1, which comprises a password index/slot number PSW_INDEX. Accordingly, the interface 1060 may receive the command VPW1 and provide the respective data as configuration data CFGa and the interface 1520 may receive the command VPW1 and provide the respective data as configuration data CFGb, wherein the respective data PSW_INDEX correspond to the slot index SLOT. For example, in the embodiment considered, each command has 32 data bits, indicated via the bit numbers BN 31 to 0. For example, in the embodiment considered, the password index/slot number PSW_INDEX has 6 bits (e.g., bits 5 to 0 of the command VPW1). Conversely, the other bits may be reserved or associated with further configuration data CFG. In various embodiments the first registers of the interfaces 1060 and 1520 may be writeable and optionally readable, as shown via the rows R (read) and W (write).

Similarly, in various embodiments, the password K may be programmed by sending a second command VPW2 to the interface 1520 or 1060, wherein the second command VPW2 comprises the respective second address. For example, Figure 8B shows an embodiment of the data of the second command VPW2, which comprises a password PSW. Accordingly, the interface 1060 may receive the command VPW2 and provide the respective data PSW as password Ka and the interface 1520 may receive the command VPW2 and provide the respective data PSW as password Kb. For example, in the embodiment considered, the password PSW has 32 bits (e.g., bits 31 to 0 of the command VPW2). In various embodiments the second registers of the interfaces 1060 and 1520 may be writeable, but not readable. For example, a read request to the second register may always return a predetermined value, such as 0x00. In various embodiments, the passwords Ka and Kb may also be stored to a plurality of registers, each having associated a respective address. For example, this permits to have passwords K with at least 64 bits, such as 128 or 256 bits.

Accordingly, in various embodiments, the password K received via the interface 1060/1520 and the (selected) reference password RK obtained from the password repository 156a are provided to a comparison circuit 1522 configured to determine whether the password K corresponds to the (selected) reference password RK. In response to determining that the password K corresponds to the (selected) reference password RK, the comparison circuit 1522 generates an overwrite signal OW indicating that the password K is correct, i.e. the password K corresponds to the (selected) reference password RK.

In various embodiments, the signal OW may be sent directly to one or more of the protections circuits 150, which thus may deactivate the respective protection. As described in the foregoing, each protection circuit 150 may not only take into account the signal OW, but also further configuration information, such as the previously mentioned life-cycle data LCD and/or configuration data CD, which may indicate whether the protection may indeed be deactivated or not by means of the signal OW.

Conversely, in the embodiment considered, the signal OW is provided to a mapping circuit 1524. Specifically, in the embodiment considered, the circuit 1524 is configured to generate a plurality of overwrite signals OW0, OW1, ... as a function of the signal OW and the slot number SLOT. For example, the mapping circuit 1524 may be implemented with a combinational logic circuit or a look-up table configured to determine the mapping between the slot number SLOT and the overwrite signals OW.

For example, in various embodiments, a respective overwrite signal OW is associated with each slot of the password repository 156a, and only the overwrite signal OW associated with the currently used slot SLOT is asserted (e.g., set to the logic level high) when the password K and RK match. For example, a given slot number (e.g., slot 4) may be associated with the protection circuit 150 controlling access to the debug interface, e.g., the access of the external debugger 30 to the debug bus 1062. Similarly, a given slot number (e.g., slot 5) may be associated with the protection circuit 150 regulating read and/or write access to the non-volatile memory 104a. Generally, a given slot number (e.g., slot 0) may represent also a master password (e.g., written by the producer of the processing system 10a). Accordingly, neglecting that also further life-cycle data LCD and/or configuration data CD may be taken into account, a protection may be removed by providing the correct password stored in a slot associated with the respective protection 150.

In various embodiments, the circuit 1524 may also comprise registers, e.g. flip-flops or latches, for storing the values of the overwrite signal OW, thereby maintain the value of the overwrite signals OW when a new password verification is requested.

Accordingly, in the embodiment considered, the circuit 1524 is configured to associate with each slot number a respective subset of protection circuits 150. Moreover, when the password received K corresponds to the reference password RK for a given slot SLOT, the circuit 1524 generates one or more signals OW in order to inform the subset of protection circuits 150 associated with the given slot SLOT that the passwords match.

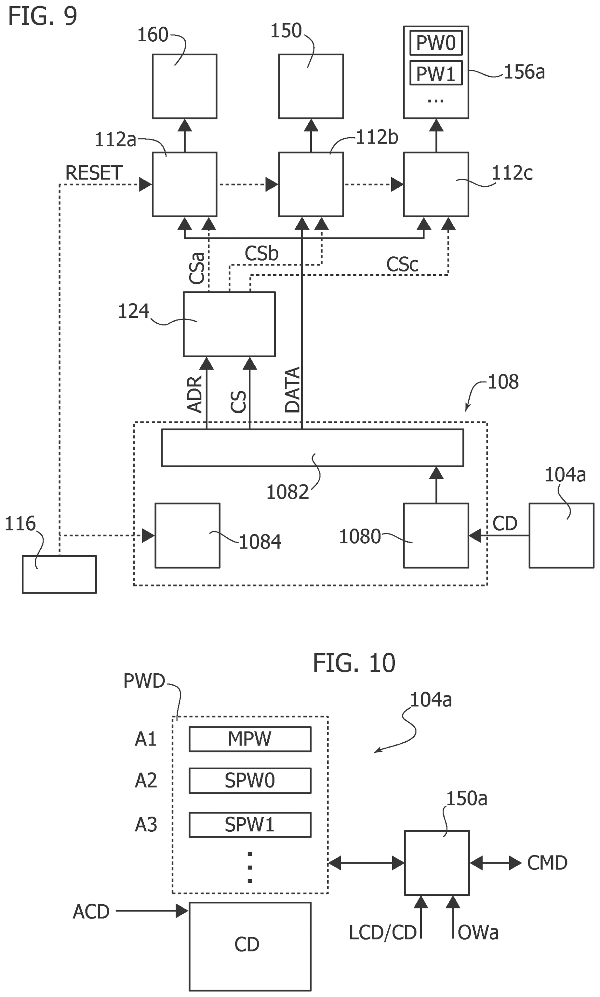

As described with respect to Figure 5, when using a temporary password repository 156a, the processing system 10a comprises also a password upload circuit. For example, Figure 9 shows an embodiment of a processing system 10a comprising a configuration circuit 108.

Specifically, in the embodiment considered, the non-volatile memory 104a is configured to store configuration data CD. For example, such configuration data CD may include calibration data used to guarantee that the hardware behavior is uniform, thereby compensating possible production process tolerances. For example, this applies often to the calibration of analog components of the processing system 10a, such as a temperature sensor, analog-to-digital converter, voltage reference, etc. Moreover, as mentioned before the configuration data CD may also be used to customize the behavior of the hardware, e.g., the circuits 160 and/or the protection circuits 150, according to different application needs. For example, as mentioned before, once the firmware of the processing system 10a has been stored in the processing system 10a, some configuration data CD may be written in order to deactivate the debug interface, which e.g. could be used to download the firmware of the processing system 10a.

In various embodiments, the configuration circuit 108 is configured to read the configuration data CD during a configuration phase, which usually starts as soon as the processing system 10a is powered on. Specifically, in the embodiment considered, the configuration circuit 108 is configured to read the configuration data CD from the non-volatile memory 104a, and distribute these configuration data CD within the processing system 10a. For example, in the embodiment considered, the configuration data CD are stored in reserved memory areas of the memory 104a, e.g. in the form of a plurality of consecutive memory locations. Accordingly, in the embodiment considered, the configuration circuit 108 accesses the reserved memory areas containing the configuration data CD, reads (e.g., sequentially) the configuration data CD and transmits the configuration data CD to a respective circuit 160 and/or protection circuit 150 within the processing system 10. As mentioned before, the circuit 160 may correspond to any circuit of the processing system 10 requiring configuration data and may correspond, e.g., to the processing unit 102, a peripheral 106 or a memory controller 100.

For example, each circuit 160 and each protection circuit 150 may have associated a respective configuration data client circuit 112. For example, in Figure 9 are shown two configuration data client circuits 112a, 112b which provide the configuration data to the circuits 160 and the protection circuits 150, respectively. Generally, each configuration data client circuit 112 may be associated univocally with a single circuit 160 or a single protection circuit 150, and provide configuration data only to the associated circuit 160 or protection circuit 150, e.g. a specific peripheral 106. However, the configuration data client circuit 112 may also be associated with a plurality of circuits 160 and/or protection circuits 150. For example, the same configuration data client 112 may be used to provide configuration data CD to a circuit 160 and the protection circuit 150 associated with this circuit 160. In general, the configuration data client circuits 112 may also be integrated in the respective circuit 160 or protection circuit 150.

Accordingly, in the various embodiments, the configuration circuit 108 may determine for each target circuit 160/150 to be configured the respective configuration data (selected from the configuration data CD) and transmit the configuration data associated with the target circuit 160/150 to the respective configuration data client circuit 112 associated with the target block 160/150. Alternatively, while (e.g., sequentially) reading the configuration data CD from the memory 104a, the configuration circuit 108 may determine the target circuit(s) for the current configuration information and send the current configuration data to the configuration data client circuit(s) associated with the respective target circuit(s). Accordingly, each configuration data client circuit 112 is configured to receive the configuration data from the configuration circuit 108, store them into internal register, e.g. store them into one or more internal flip-flops or latches. The data stored in the register may then be used to generate one or more signals, which influence the behavior of one or more circuits 160 and/or protection circuits 150.

Generally, any communication may be used for transmitting the configuration data CD to the configuration data clients 112, including both serial and parallel communications. For example, the configuration circuit 108 and the configuration data client circuit 112 may be connected via the communication system 114 or an additional bus.

For example, in Figure 9, the configuration circuit 108 comprises a data read circuit 1080 configured to read the configuration data CD from the memory 104a and a dispatch circuit 1082 configured to transmit the configuration data CD to the configuration data client circuits 112, e.g., via the communication system 114 or a dedicated communication system.

Specifically, in various embodiments, the configuration data CD are stored in the form of data frames in accordance with a given format, called in the following Device Configuration Format (DCF). For example, each data frame may comprise two fields: the payload (i.e., the real data), called DCF payload, and possible additional data attributes used to identify the receiver of the data, called DCF attributes, wherein the receiver is one of the configuration data client circuits 112 representing a DCF client. For example, the data attributes may consist in 16 or 32 bits, wherein a given number of bits specifies the address of one of the configuration data clients 112, and the payload may consist of 16 or 32 bits. For example, the data read circuit 1080 may be configured to read blocks of 64 bits from the memory 104a, wherein the first 32 bits contain the data attributes (including the address of a configuration data client) and the second 32 bits contain the configuration data to be transmitted to the address specified in the data attributes.

Accordingly, in various embodiments, the dispatch circuit 1082 is configured to generate a data signal DATA having a given number of bits (corresponding to the bits of the payload) containing the configuration data to be transmitted to a given configuration data client 112 and further control signals for selecting the target configuration data client 112. For example, in the example considered, the dispatch circuit 1082 generates also an address signal ADR containing the address of the target configuration data client circuit 112 and optionally a chip select signal CS used to signal that the address signal ADR and the data signal DATA are valid. For example, the address signal ADR (and the chip select signal CS) may be provided to a decoder 124 configured to activate one of the configuration data client circuits 112 as a function of the address signal ADR, e.g., by generating respective signals CSa, CSb and CSc. As mentioned before, the dispatch circuit 1082 and the various configuration data client circuits 112 may be connected via the communication system 114 or a dedicated bus.

In various embodiments, the configuration circuit 108 also comprises a state control circuit 1084 configured to manage the various configuration phases of the processing system 10a. For example, once the processing system 10a is switched-on, a reset module 116 of the processing system 10a may generate a reset signal RESET, which is used to perform a reset of the various components of the processing system 10a. For example, the reset signal RESET may correspond to a reset pulse of a given number of clock cycles, provided to the circuits 160 of the processing system 10a. Similarly, the reset signal RESET may be used by the configuration data client circuits 112 to set the internal register to a given reset value. Next, in response to the reset, the state control circuit 1084 may activate the configuration phase. Specifically, during the configuration phase, the data read circuit 1080 may read the configuration data CD from the memory 104a and the dispatch circuit 1082 may send the configuration data CD to the various configuration data client circuits 112, thereby overwriting the reset values.

Accordingly, in various embodiments, the configuration circuit 108 may also be configured to transmit the reference passwords RK to the temporary password repository 156. For example, in various embodiments, one or more configuration data client circuits 112c are associated (preferably univocally) with the temporary password repository 156a. Accordingly, in various embodiments, the configuration circuit 108 is configured to read also the reference password(s) RK from the memory 104a and send the reference password(s) RK to the configuration data client 112c associated with the temporary password repository 156, thereby loading the reference password(s) RK into the temporary password repository 156.

For example, in the embodiment considered, the temporary password repository 156 comprises a plurality of slots PW0, PW1, ..., each slot being arranged to store a respective reference password RK. In various embodiments, a single configuration data client circuit 112c is associated with the temporary password repository 156a. In this case, a plurality of reference password RK may be sent in sequence to the address of the configuration data client 112c and, once a reference password RK is received, the temporary password repository 156 may store the received reference password to a next slot of the internal memory. Alternatively, due to the fact that the configuration data clients 112 comprise also internal registers, these registers may also be used directly as memory of the temporary password repository 156a. For example, in this case, a plurality of configuration data client circuits 112c may be associated with the temporary password repository 156a, wherein each configuration data client 112c has a respective (univocal) address. In this case, a plurality of reference passwords RK may be sent in sequence to the addresses of the configuration data clients 112c.

In various embodiments, one or more reference passwords RK are stored in the memory 104a together with the configuration data CD in the form of DCF data frames having the address of a configuration data client circuit 112c associated with the temporary password repository 156, and as payload the respective reference password(s) RK. In fact, in this way, the configuration circuit 108 automatically transfers the one or more reference passwords RK to the configuration data client circuit(s) 112c, and thus the temporary password repository 156a.

However, the inventors have observed that this may be disadvantageous when an update of a given reference password RK is required. Accordingly, in various embodiments, the one or more reference password(s) RK are stored to dedicated memory locations of the memory 104a and the configuration circuit 108 may be configured to transfer the one or more reference passwords RK form the dedicated memory locations to the configuration data client circuit(s) 112c associated with the temporary password repository 156.

Figure 10 shows an embodiment of the data stored to the non-volatile memory 104a. Specifically, in the embodiment considered, the memory 104a comprises a memory area for storing password data PWD, such as a memory slot for storing a master password MPW, and a plurality of memory slots for strong security password, such as passwords SPW0, SPW1, etc. For example, in various embodiments, the memory 104a may comprises a number N of memory slots for storing the password data PWD, wherein the number N may be selected, e.g., between 6 and 32. Specifically, in the embodiment considered, the master password MPW and the security passwords SPW are stored to predetermined memory locations, i.e., the memory slot for the master password MPW has an address A1, the memory slot of the security password SPW0 has an address A2, the memory slot of the security password SPW1 has an address A3, etc.

Moreover, in the embodiment considered, the non-volatile memory 104a comprises a memory area for storing the configuration data CD. For example, the configuration data may start at a predetermined address ACD. In various embodiments, the address ACD is fixed. Conversely, the addresses for the password data PWD may be fixed or programmable. For example, the configuration data CD may be used to configure a start address for the password data PWD, e.g., the address A1. For example, in this case, the configuration circuit 108 itself may have associated a configuration data client circuit 112 configured to provide the start address of the password data PWD. For example, in this case, a DCF frame may be stored to the configuration data CD, wherein this DCF frame comprises the address of the configuration data client circuit 112 associated with the configuration circuit 108 and as payload the start address of the password data PWD.

As mentioned before, the password repository 156a may directly correspond to password data PWD stored to the memory 104a, i.e., the password verification circuit 152a may access the password data PWD in the memory 104a to read a given password as a function of the slot data SLOT, or the processing system 10a, e.g., the configuration circuit 108 or another type of password upload circuit, may transfer the password data PWD to a temporary password repository 156a. For example, the master password MPW may correspond to or may be transferred to the password slot PW0, the security password SPW0 may correspond to or may be transferred to the password slot PW1, etc.

Specifically, in various embodiments, the processing system 10a may comprise a protection circuit 150a configured to limit read and write access to the memory 104a, and in particular (at least) the memory area PWD, via circuits different from the password verification circuit 152a (when directly used as password repository 156a) or the configuration circuit 108 (when transferred to the password repository 156a). For example, in various embodiments, the protection circuit 150a is configured to disable read and write access as a function of life-cycle data LCD and/or configuration data CD. For example, in various embodiments, the chip producer writes the master password MPW, and optionally one or more security passwords SPW. Next, the chip producer may advance the life-cycle data LCD to a next stage, e.g., the stage LC1. For example, the protection circuit 150a may be configured to automatically disable read and write access once the life-cycle stage is different from the life-cycle stage LC0.

Accordingly, in this case, the master password MPW may be used to enable write access to the password data PWD, i.e., the password management circuit may be configured to receive a password verification command VPW, e.g., the commands VPW1 and VPW2 described in the foregoing, selecting the password slot of the master password and providing a password K correspond to the master password MPW. In response to determining that the password K corresponds to the master password MPW, the password verification circuit 152a may assert an overwrite signal OWa, which is provided to the protection circuit 150a. Specifically, the protection circuit 150a may be configured to disable the write protection, and optionally the read protection, in response to the overwrite signal OWa.

Accordingly, in this way, the processing circuit 102 or the interface IF may be used to provide the master password MPW in order to enable write access to the password data PWD. Next, the processing circuit 102 or the interface IF may be used to update one or more of the password data PWD, e.g., the master password MPW or a security password SPW. Accordingly, in various embodiments, each security password SWP may be associated with a given protection circuit 150 or subset of protection circuits 150, while the master password may be used to disable (at least) the write access to the password data PWD.

However, when the processing system 10a should be analyzable by different entities, such as a chip producer, an engine control unit manufacturer and a car manufacturer, these entities have to know the password data. This may be particularly complex when large software development teams are involved and the passwords should be updateable.

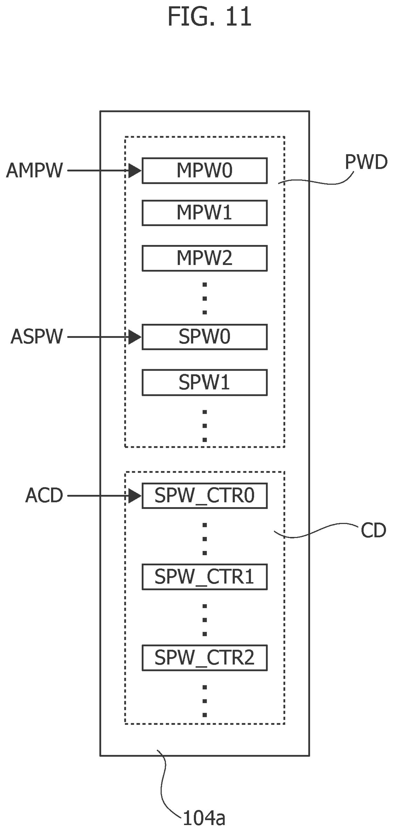

In the following will thus be described a modified embodiment, wherein the processing system 10a is configured to use a plurality of master password. Specifically, Figure 11 shows an embodiment of the password data PWD adapted to be stored to the non-volatile memory 104a.

In the embodiment considered, the memory 104a comprises again a (first) memory area configured to store password data PWD and a (second) memory area configured to store configuration data CD. Specifically, in the embodiment considered, the password data PWD comprise a plurality of memory slots arranged to store a plurality of master passwords MPW, and a plurality of memory slots arranged to store a plurality of security passwords SPW. For example, in various embodiments, the password data PWD comprise a first memory slot arranged to store a first master password MPW0 and a second memory slot arranged to store a second master password MPW1. In various embodiments, the password data PWD comprise one or more further memory slots arranged to store one or more further master passwords, such as a third master password MPW2.

For example, the slots assigned to the master passwords MPW may start at a memory address AMPW, the slots assigned to the security passwords SPW may start at a memory address ASPW and the configuration data CD may start at a memory address ACD. In various embodiments, the addresses ACD, AMPW and ASPW are fixed, e.g., hardwired. However, the addresses AMPW and/or ASPW may also be programmable, e.g., as a function of the configuration data ACD. In various embodiments, the memory slots for the security password SPW follow directly the memory slots for the master passwords MPW.

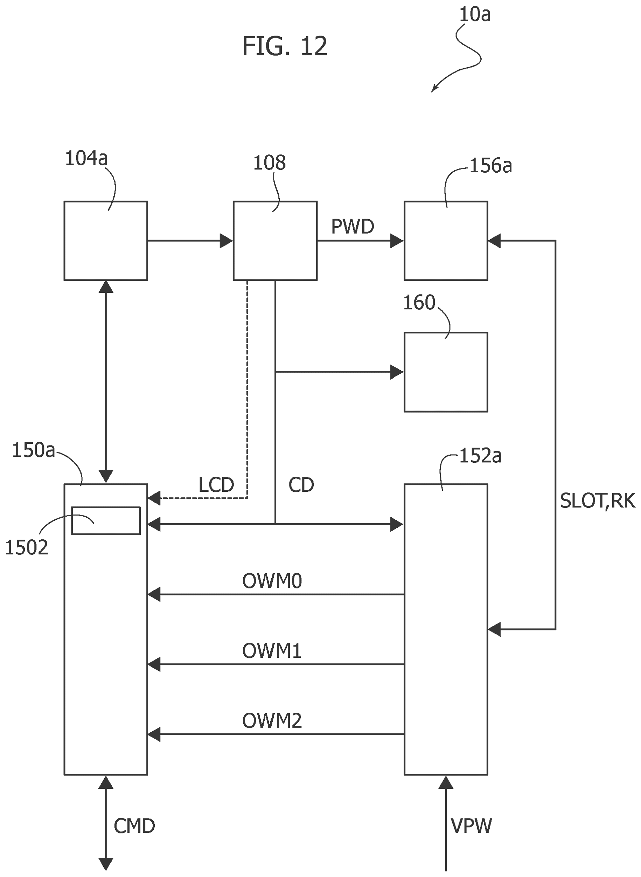

Accordingly, as shown in Figure 12, in various embodiments, the processing system 10a comprises a configuration circuit 108 configured to read the configuration data CD from the non-volatile memory 104a and transfer the configuration data CD to one or more circuits 160, such as a processing circuit 102, a memory controller 100, a peripheral 106, etc. In various embodiments, the configuration circuit 108 may also provide life-cycle data LCD. For example, the configuration circuit 108 may be configured to read the life-cycle data LCD from the memory 104a or another non-volatile memory, such as a one-time programmable memory.

In various embodiments, the processing system 10a comprises also a protection circuit 150a configured to control (write and optionally read) access to the non-volatile memory 104a, as shown via a command CMD. The processing system 10a may also comprise further protection circuits 150, e.g., for one or more of the circuits 160.

In various embodiments, the processing system 10a comprises also a password verification circuit 152a configured to provide one or more overwrite signals to the protection circuit 150a. Specifically, in various embodiments, the password verification circuit 152a provides a plurality of signals OWM indicating whether a correct master password has been provided and the index of the master password having been provided. For example, in Figure 12, the password verification circuit 152a provides for each master password MPW a respective overwrite signal, such as overwrite signals OWMO, OWM1 and OWM2 for the master password MPWO, MPW1 and MPW2, respectively, wherein the password verification circuit 152a is configured to assert a given overwrite signal in response to detecting that a respective correct master password MPW has been provided via the password verification command VPW, e.g., the password verification circuit 152a asserts the signal OWMO when the verification of the master password MPW0 was successful, i.e., when the password verification command VPW indicates, e.g., via the data PSW_INDEX, the slot number of the master password MPW0 and provides a password K, e.g., via the data PSW, corresponding to the master password MPW0. Similarly, the signal OWM1 may be asserted in response to a successful verification of the master password MPW1. However, also other signals may be used to indicate that a successful verification of a given master password has been performed, such as a signal that a successful verification of a master password has been performed and a signal indicating which master password has been verified, such as the slot number SLOT of the password verification command VPW.

Accordingly, in various embodiments, the protection circuit 150a is configured to control write and possibly read access to the non-volatile memory 104a as a function of the configuration data CD, the life-cycle data LCD, and/or the overwrite signals OWM provided by the password verification circuit 152a, such as the signals OWMO, OWM1 and OWM2. Embodiments of the operation of the protection circuit 150a will be described in the following.

As mentioned before, in order to execute a password verification command VPW, the password verification circuit 152a may be configured to access the password data PWD. As described in the foregoing, the password repository 156a may directly correspond to the password data PWD stored to the non-volatile memory 104a, i.e., the password verification circuit 152a may be configured to access the non-volatile memory 104a, e.g., by using the slot number SLOT and the addresses AMPW and/or ASPW, in order to read the reference password RK for a given password verification operation.

Alternatively, the password data PWD may be transferred to a temporary password repository 156a. For example, the master password MPW0 may be associated with the password slot PW0, the master password MPW1 may be associated with the password slot PW1, the master password MPW2 may be associated with the password slot PW2, the security password SPW0 may be associated with the password slot PW3, the security password SPW1 may be associated with the password slot PW4, etc. For example, in various embodiments, the temporary password repository 156a comprises a number of slots correspond to the number of memory slots of the password data PWD, wherein the processing system 10a is configured to transfer the content of each memory slot of the password data PWD to a respective slot in the temporary password repository 156a. In various embodiments, the processing system 10a may be configured to transfer only the memory slots of the password data PWD comprising programmed passwords. For example, in Figure 12, the configuration circuit 108 or another password upload circuits, is configured to transfer the password data PWD from the non-volatile memory 104a to the temporary password repository 156a, and the password verification circuit 152a is configured to access a temporary password repository 156a, e.g., by using the slot number SLOT, in order to read the reference password RK for the password verification operation.

In various embodiments, also the password verification circuit 152a and/or the protection circuit 150a may be configured to receive configuration data CD from the configuration circuit 108. For example, in various embodiments, the password verification circuit 152a and/or the protection circuit 150a comprise one or more respective configuration data client circuits 112 connected to the configuration circuit 108. Reference may be made to the description of Figure 9 for possible embodiments of the configuration circuit 108, the configuration data client circuits 112 and the communication system therebetween.

Specifically, in various embodiments, each master password MPW is associated with a given user or user group, such as the chip producer, an engine control unit producer and a car manufacturer. Specifically, in various embodiments, the first master password MPW0 is associated with the producer of the processing system 10a, e.g., a chip producer, and the second master password MPW1 is associated with a software developer, such as an engine control unit developer. The one or more further master password may be associated with further software developers, e.g., the third master password MPW2 may be associated with a car manufacturer.

Accordingly, once the processing system 10a is produced, the non-volatile memory 104a is empty, i.e., the password data PWD and the configuration data CD are unprogrammed. Moreover, the life-cycle data LCD correspond to an unprogrammed value indicating a first life-cycle stage LC0, such as a production stage.

Next the producer of the processing system 10a, such as a chip manufacture, may program the first master password MPW0 by accessing the non-volatile memory 104a. For example, in various embodiments, the protection circuit 150a may be configured to disable the write protection of the memory 104a, in particular the memory area used to store the password data PWD, when the life-cycle data LCD correspond to the stage LC0.

In various embodiments, the producer of the processing system 10a may also program one or more memory location arranged to store security passwords SPW and/or one or more configuration data CD. As mentioned before, in various embodiments, each security password SPS may be associated with a given protection.

Specifically, as shown in Figure 12, in various embodiments, the protection circuit 150a comprises one or more registers 1502 configured to store security password access data SPW_CTR, wherein the protection circuit 150a is configured to receive configuration data CD from the configuration circuit 108 and selectively store the received configuration data to the one or more registers 1502. For example, when using DCF frames, the respective DCF frame stored to the configuration data CD within the non-volatile memory 104a may comprise an address associated with the one or more registers 1502. Specifically, in various embodiments, the security password access data SPW_CTR indicate for each memory slot arranged to store a security password SPW a respective index of a master password MPW required to access to respective memory slot.

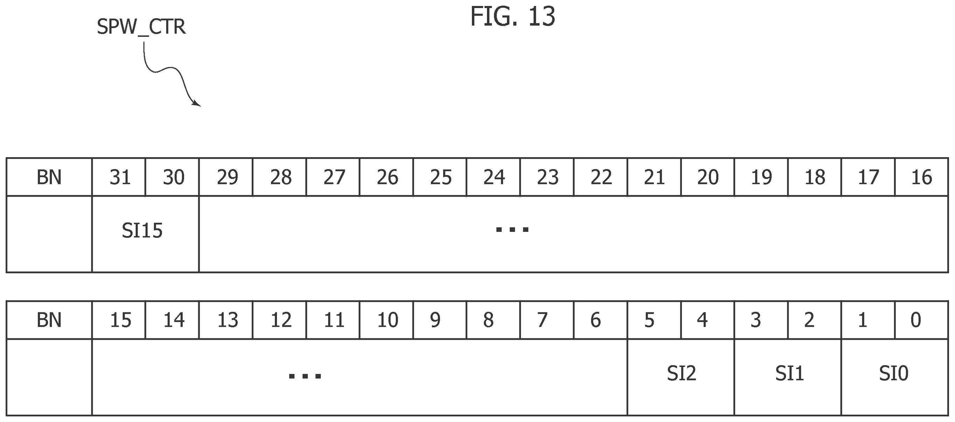

For example, Figure 13 shows an embodiment of the security password access data SPW_CTR. Specifically, in the embodiment considered, a field SI is associated with each memory slot arranged to store a security password SPW, e.g., a field SI0 is associated with the memory slot arranged to store the security password SPW0, a field SI1 is associated with the memory slot arranged to store the security password SPW1, etc. For example, in the embodiment considered, each field SI has two bits, but also more bits can be used.

In various embodiments, a single register 1502 is used to store the security password access data SPW_CTR, e.g., 16 fields SI0 to SI15 for respective 16 security passwords SPW. However, also a plurality of registers 1502 may be used to store security password access data SPW_CTR for more security passwords SPW and/or the fields SI having more bits.

Accordingly, as shown in Figure 11, in various embodiments, the producer of the processing system 10a may store a frame of configuration data to the configuration data CD, wherein the frame of configuration data comprises as address the address associated with the one or more registers 1502 and as payload respective security password access data SPW_CTR0. Accordingly, in various embodiments, when the processing system 10a is switched on, the configuration circuit 108 reads sequentially the configuration data CD and transfers the configuration data CD to the respective circuits, thereby transmitting the security password access data SPW_CTR0 to the protection circuit 150a.

Similarly, a software developer, such as an engine control unit producer, may program the second master password MPW1 by accessing the non-volatile memory 104a. In various embodiments, the software developed may also program one or more memory location arranged to store security passwords SPW and/or one or more configuration data CD. Specifically, in various embodiments, the software developer may store a frame of configuration data to the configuration data CD, wherein the frame of configuration data comprises as address the address associated with the one or more registers 1502 and as payload respective security password access data SPW_CTR1. Accordingly, in the embodiment considered, when the processing system 10a is switched on, the configuration circuit 108 reads sequentially the configuration data CD and transfers the configuration data CD to the respective circuits, thereby transmitting the security password access data SPW_CTR1 to the protection circuit 150a.

Similarly, when supported, a further software developer, such as car manufacturer, may program the third master password MPW2 by accessing the non-volatile memory 104a. In various embodiments, the further software developed may also program one or more memory location arranged to store security passwords SPW and/or one or more configuration data CD. Specifically, in various embodiments, the further software developer may store a frame of configuration data to the configuration data CD, wherein the frame of configuration data comprises as address the address associated with the one or more registers 1502 and as payload respective security password access data SPW _CTR2. Accordingly, in the embodiment considered, when the processing system 10a is switched on, the configuration circuit 108 reads sequentially the configuration data CD and transfers the configuration data CD to the respective circuits, thereby transmitting the security password access data SPW_CTR2 to the protection circuit 150a.

Accordingly, in various embodiments, the protection circuit 150a, e.g., a respective configuration data client circuit 112, may receive one or more of the security password access data SPW_CTR0, SPW_CTR1 and SPW _CTR2. However, already assigned slots of security passwords SPW should not be reassigned.

For this reason, in various embodiments, in response to receiving security password access data, the protection circuit 150a, e.g., the respective configuration data client circuit 112, is configured to compare the value of each field SI of the security password access data SPW_CTR stored to the register 1502 with a predetermined value indicative of an unprogrammed field SI. In response to determining that the value of a given field SI of the security password access data SPW_CTR has the predetermined value, the protection circuit 150a updates the field SI with the respective bits of the received security password access data. Accordingly, in this way, just the first value being different from the predetermined value is stored to a given field SI of the security password access data SPW_CTR. For example, in various embodiments, the following bit sequences may be used for each field SI:
- a first value, e.g., "11", indicating that the respective field SI is unprogrammed;
- a second value, e.g., "00", indicating that the security password SPW associated with the respective field SI is assigned to the master password MPWO;
- a third value, e.g., "01", indicating that the security password SPW associated with the respective field SI is assigned to the master password MPW1; and
- a fourth value, e.g., "10", indicating that the security password SPW associated with the respective field SI is assigned to the master password MPW2 (when supported).

Accordingly, in this case, the bits of each field SI of the register(s) 1502 would have initially, e.g., in response to a reset, the values set to the predetermined/unprogrammed value, such as "11". Next, in response to receiving security password access data from the configuration circuit 108, the protection circuit 150a overwrites the bit values of a given field SI only when the bits of the field are still set to the predetermined/unprogrammed value. Accordingly, the protection circuit 150a implements for each field SI a write-once protection, i.e., once a given slot of a security password SPW is assigned to a given master password MPW, the respective programming cannot be changed anymore by appending further frames of configuration data to the configuration data CD.

Accordingly, by using the configuration data CD, each memory slot of a security password SPW may be assigned to a given master password (or may remain unassigned). Specifically, in various embodiments, this information is used by the protection circuit 150a in order to enable write access to a given memory slot arranged to store a security password SPW, when the assigned master password is provided.

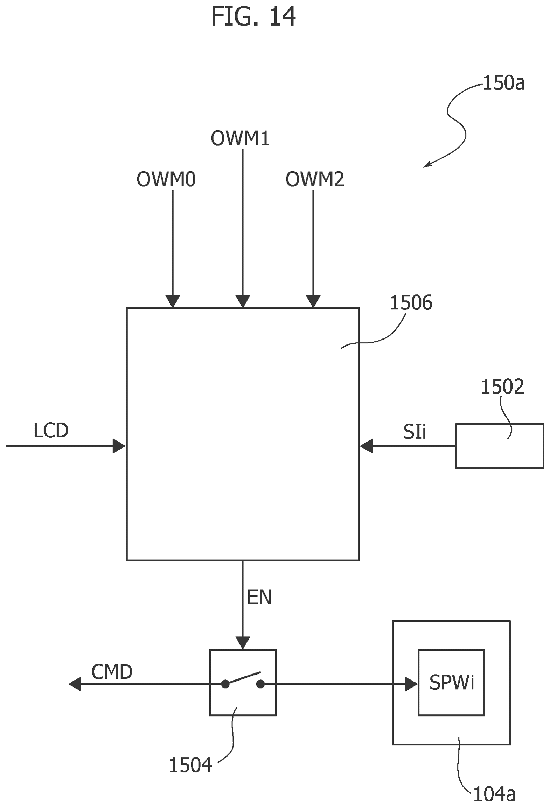

For example, Figure 14 shows an embodiment of the protection circuit 150a. Specifically, Figure 14 shows only the part of the circuit managing the access to a given memory slot i of the non-volatile memory arranged to store a respective security password SPWi. Accordingly, indeed the circuit shown in Figure 14 may be repeated for each memory slot arranged to store a security password SPW.

Specifically, as mentioned before, the protection circuit 150a is configured to manage write and optionally read access to the memory slot i arranged to store a respective security password SPWi, as schematically shown via an electronic switch 1504. For example, when an enable signal EN is asserted, the protection circuit 150a may enable access to the memory slot i and, when the enable signal EN is de-asserted, the protection circuit 150a may disable access to the memory slot i.

For example, in line with the foregoing, the enable signal EN may be generated as a function of life-cycle data LCD and/or configuration data CD. For example, in the embodiment considered, the protection circuit 150a comprises a protection control circuit 1506, e.g., implemented with a combinational logic circuit, configured to enable or disable the access to the memory slot i, e.g., via the enable signal EN, as a function of life-cycle data LCD and optionally the configuration data CD. In various embodiments, the protection control circuit 1506 is configured to enable or disable the access to the memory slot i, e.g., via the enable signal EN, also as a function of the overwrite signals OWM received from the password verification circuit 152a, e.g., the signals OWMO, OWM1 and OWM3, and the security password control data SPW_CTR provided by the register 1502.

For example, in various embodiments, the processing system 10a is configured to support the following sequence of life-cycle stages, each having associated respective life-cycle data LCD:
- a "production" stage LC0, e.g., when the processing system 10a is in the chip fabric;
- a "software development" stage LC1, e.g., when the processing system 10a has been shipped to the 1st tier customer (e.g., a producer of an engine control unit);
- an "in field" stage LC3, e.g., when the device is installed in the final product (e.g., in a car sold in the market); and
- a "failure analysis" stage LC4, e.g., when the device is shipped back to producer of the processing system 10a or the software developer for diagnostic purposes.

In this case, the processing system 10a may support two master passwords MPW0 and MPW1. In various embodiments, the processing system 10a is configured to support, between the stages LC1 and LC3, one or more "further software development" stages LC2, each having associated respective life-cycle data LCD. For example, the stage LC2 may be activated before the device produced by the 1st tier customer is shipped to a next-level customer (e.g., a car maker). In in this case, the processing system 10a may support also one or more further master passwords, such as a master password MPW2.

For example, in various embodiments, in response to determining that the life-cycle data LCD indicate the "production" stage LC0, the protection control circuit 1506 is configured to enable write and optionally read access to all security password SPW, i.e., access to each memory slot i is enabled. As mentioned before, during the production life-cycle stage LC0, the producer of the processing system 10a may program the master password MPW0. Moreover, the producer of the processing system 10a may program one or more security passwords SPW and store the data SPW_CFG0 to the configuration data CD in order to assign the one or more security passwords SPW to the master password MPWO, e.g., by setting the bits of the respective fields SI of the data SPW_CFG0 to the second value, e.g., "00", or possibly also another master password MPW.

In various embodiments, in response to determining that the life-cycle data indicate the "software development" stage LC1, the protection control circuit 1506 is configured to enable write and optionally read access to a given memory slot i when the given memory slot i is not yet assigned to a master password MPW, e.g., when the bits of a respective field SIi of the security password configuration data SPW_CFG stored to the register 1502 have the first value, e.g., "11".

Moreover, in various embodiments, the protection control circuit 1506 is configured to enable write and optionally read access to the given memory slot i, when the given memory slot i is associated with the master password MPW1, e.g., in response to determining that the bits of the respective field SIi have the third value, e.g., "01". Accordingly, in various embodiments, access to the security passwords SPW associated with the master password MPW1 is enabled during the software development life-cycle stage LC1.

Accordingly, in the embodiment considered, access to the given memory slot i is not possible when the memory slot i is associated with the master password MPWO, e.g., in response to determining that the bits of the respective field SIi have the second value, e.g., "00". In various embodiments, the protection control circuit 1506 may thus be configured to enable write and optionally read access to a memory slot i associated with the master password MPWO, when the signals received from the password verification circuit 152a indicate a successful password verification of the master password MPWO, e.g., in response to determining that the signal OWMO is asserted.

In various embodiments, in response to determining that the life-cycle data indicate the "further software development" stage LC2 (when supported), the protection control circuit 1506 is configured to enable write and optionally read access to a given memory slot i when the given memory slot i is not yet assigned to a master password MPW, e.g., when the bits of the respective field SIi of the security password configuration data SPW_CFG stored to the register 1502 have the first value, e.g., "11".

Moreover, in various embodiments, the protection control circuit 1506 is configured to enable write and optionally read access to the given memory slot i, when the given memory slot i is associated with the master password MPW2, e.g., in response to determining that the bits of the respective field SIi have the fourth value, e.g., "10". Accordingly, in various embodiments, access to the security passwords SPW associated with the master password MPW2 is enabled during the further software development life-cycle stage LC2.

In various embodiments, access to the given memory slot i is not possible when the memory slot i is already associated with the master password MPW0 or MPW1, e.g., in response to determining that the bits of the respective field SIi have the second value, e.g., "00", or the third value, e.g., "01". In various embodiments, the protection control circuit 1506 may thus be configured to enable write and optionally read access to a memory slot i associated with the master password MPWO, when the signals received from the password verification circuit 152a indicate a successful password verification of the master password MPWO, e.g., in response to determining that the signal OWMO is asserted. Similarly, the protection control circuit 1506 may be configured to enable write and optionally read access to a memory slot i associated with the master password MPW1, when the signals received from the password verification circuit 152a indicate a successful password verification of the master password MPW1, e.g., in response to determining that the signal OWM1 is asserted.

In various embodiments, in response to determining that the life-cycle data indicate the "in-field" stage LC3, the protection control circuit 1506 is configured to disable write and read access to a given memory slot i. In various embodiments, the protection control circuit 1506 may be configured to enable write and optionally read access to a memory slot i associated with a given master password MPW, when the signals received from the password verification circuit 152a indicate a successful password verification of the respective master password, e.g., in response to determining that the signal OWMO is asserted for a memory slot i associated with the master password MPW0. Accordingly, in various embodiments, a security password associated with a given master password MPW can be refreshed (re-programmed) only upon a successful challenge of the respective master password MPW, wherein the master password MPW0 is known by chip producer, the master password MPW1 is known by the 1^{st} Tier software developer, and the master password MPW2 is known by the OEM Production customer.

Accordingly, in various embodiments, the protection control circuit 1506 may be configured to disable access to a memory slot i by default and selectively enable access to the memory slot i as a function of the life-cycle data LCD, the field SIi of the security password configuration data SPW_CFG associated with the memory slot i, and the overwrite signals OWM provided by the password verification circuit 152a.

For example, in various embodiments, in response to determining that the life-cycle data LCD indicate the production life-cycle stage LC0, the protection control circuit 1506 is configured to enable access to the memory slot i, e.g., assert the enabled signal EN.

Conversely, in various embodiments, in response to determining that the life-cycle data LCD indicate the software development life-cycle stage LC1, the protection control circuit 1506 is configured to:
- in response to determining that the field SIi indicates that the memory slot i is unassigned, e.g., in response to determining that the field SIi has the first value, e.g., "11", enable access to the memory slot i;
- in response to determining that the field SIi indicates that the memory slot i is assigned to the master password MPWO, e.g., in response to determining that the field SIi has the second value, e.g., "00", determine whether the overwrite signals OWM indicate that a successful password verification of the master password MPW0 was performed, e.g., by determining whether the overwrite signal OWMO is asserted, and, in response to determining that the overwrite signals OWM indicate that a successful password verification of the master password MPW0 was performed, enable access to the memory slot i; and
- in response to determining that the field SIi indicates that the memory slot i is assigned to the master password MPW1, e.g., in response to determining that the field SIi has the third value, e.g., "01", enable access to the memory slot i.

In various embodiments, in response to determining that the life-cycle data LCD indicate the further software development life-cycle stage LC2 (when supported), the protection control circuit 1506 is configured to:
- in response to determining that the field SIi indicates that the memory slot i is unassigned, e.g., in response to determining that the field SIi has the first value, e.g., "11", enable access to the memory slot i;
- in response to determining that the field SIi indicates that the memory slot i is assigned to the master password MPW0 or MPW1, e.g., in response to determining that the field SIi has the second value, e.g., "00", or third value, e.g., "01", determine whether the overwrite signals OWM indicate that a successful password verification of the respective master password MPW0 or MPW1 was performed and, in response to determining that the overwrite signals OWM indicate that a successful password verification of the respective master password MPW0 or MPW1 was performed, enable access to the memory slot i; and
- in response to determining that the field SIi indicates that the memory slot i is assigned to the master password MPW2, e.g., in response to determining that the field SIi has the fourth value, e.g., "10", enable access to the memory slot i.

In various embodiments, in response to determining that the life-cycle data LCD indicate the in-field stage LC3, the protection control circuit 1506 is configured to, in response to determining that the field SIi indicates that the memory slot i is assigned to the master password MPWO, MPW1 or MPW2, determine whether the overwrite signals OWM indicate that a successful password verification of the respective master password MPWO, MPW1 or MPW2 was performed and, in response to determining that the overwrite signals OWM indicate that a successful password verification of the respective master password MPWO, MPW1 or MPW2 was performed, enable access to the memory slot i.

In various embodiments, in response to determining that the life-cycle data LCD indicate the failure analysis stage LC4, the protection control circuit 1506 is configured to maintain disabled access to the memory slot i. In fact, in the failure analysis stage LC4 there is usually no need to refresh any password.

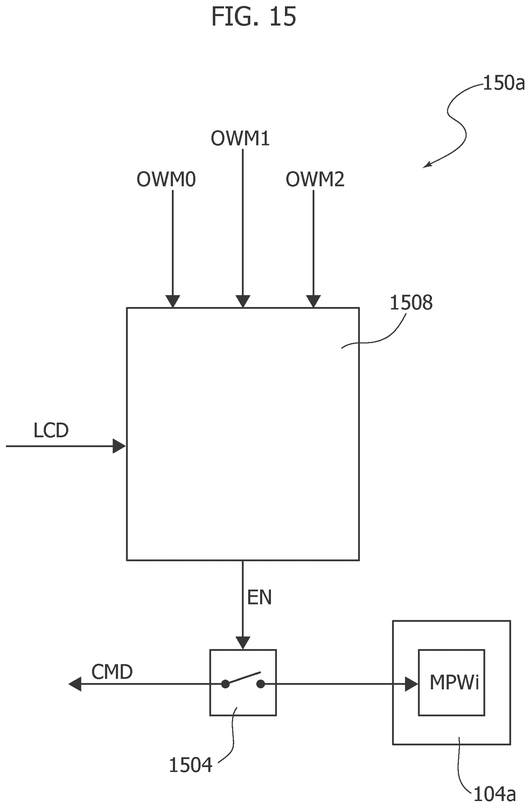

Figure 15 shows an embodiment of the part of the circuit managing the access to a given memory slot i of the non-volatile memory 104a arranged to store a respective master password MPWi, e.g., the master password MPWO, MPW1 or MPW2. Accordingly, indeed the circuit shown in Figure 15 may be repeated for each memory slot arranged to store a master password MPW.

Specifically, as mentioned before, the protection circuit 150a is configured to manage write and optionally read access to the memory slot i arranged to store a respective master password MPWi, as schematically shown again via an electronic switch 1504. For example, when an enable signal EN is asserted, the protection circuit 150a may enable access to the memory slot i and, when the enable signal EN is de-asserted, the protection circuit 150a may disable access to the memory slot i.

In the embodiment considered, the protection circuit 150a comprises a protection control circuit 1508, e.g., implemented with a combinational logic circuit, configured to enable or disable the access to the memory slot i, e.g., via the enable signal EN, as a function of life-cycle data LCD and optionally the configuration data CD. In various embodiments, the various protection control circuits 1506 and 1508 may also be combined and, e.g., implemented with one or more combinational logic circuits.

For example, in various embodiments, in response to determining that the life-cycle data LCD indicate the production life-cycle stage LC0, the protection control circuit 1508 is configured to enable access to the memory slot i, e.g., assert the enabled signal EN. Accordingly, in various embodiments, all master password MPW may be written during the stage LC1.

Conversely, in various embodiments, in response to determining that the life-cycle data LCD indicate the software development life-cycle stage LC2, the protection control circuit 1506 is configured to:
- in response to determining that the memory slot i is arranged to store the master password MPWO, determine whether the overwrite signals OWM indicate that a successful password verification of the master password MPW0 was performed, e.g., by determining whether the overwrite signal OWMO is asserted and, in response to determining that the overwrite signals OWM indicate that a successful password verification of the master password MPW0 was performed, enable access to the memory slot i;
- in response to determining that the memory slot i is arranged to store the master password MPW1, enable access to the memory slot i.

In various embodiments, in response to determining that the life-cycle data LCD indicate the further software development life-cycle stage LC2 (when supported), the protection control circuit 1506 is configured to:
- in response to determining that the memory slot i is arranged to store the master password MPW0 or MPW1, determine whether the overwrite signals OWM indicate that a successful password verification of the respective master password MPW0 or MPW1 was performed, e.g., by determining whether the respective overwrite signal OWMO or OWM1 is asserted and, in response to determining that the overwrite signals OWM indicate that a successful password verification of the respective master password MPW0 or MPW1 was performed, enable access to the memory slot i; and
- in response to determining that the memory slot i is arranged to store the master password MPW2, enable access to the memory slot i.

In various embodiments, in response to determining that the life-cycle data LCD indicate the in-field stage LC3, the protection control circuit 1508 is configured to determine whether the overwrite signals OWM indicate that a successful password verification of the respective master password MPWO, MPW1 or MPW2 was performed and, in response to determining that the overwrite signals OWM indicate that a successful password verification of the respective master password MPWO, MPW1 or MPW2 was performed, enable access to the memory slot i, i.e., the master password MPW0 enables access to the memory slot arranged to store the master password MPWO, the master password MPW1 enables access to the memory slot arranged to store the master password MPW1, etc.

In various embodiments, in response to determining that the life-cycle data LCD indicate the failure analysis stage LC5, the protection control circuit 1508 is configured to maintain disabled access to the memory slot i.

Accordingly, in various embodiments, in the development life-cycle stages (LC0, LC1 and optionally LC2), each user may write a respective master password, e.g., MPW0 for stage LC0, MPW1 for stage LC1, and MPW2 for stage LC2. Moreover, each user may write unassigned security passwords SPW and security passwords SPW associated via the data SPW_CTR with the respective master password MPW.

As mentioned before, in various embodiments, a user may also write the master password MPW associated with a user of a following development life-cycle stage (e.g., a user of stage LC0 may write the master password MPW1 of the user stage LC1). Moreover, the user may also write one or more security passwords SPW and associate the security passwords SPW via the data SPW_CTR with the master password MPW of the user of the following development life-cycle stage.

Conversely, in various embodiments, a password challenge of the respective master password is required, when a user wants to write the master password MPW associated with a user of a previous development life-cycle stage (e.g., a user of stage LC1 wants to write the master password MPW0 of the user stage LC0), and the respective security passwords SPW associated with the master password MPW of the user of the previous development life-cycle stage.

In various embodiments, the in-field life-cycle stage LC3 requires always a successful password challenge of the master password MPW in order to write the master password MPW or the security passwords SPW associated with the master password MPW. Accordingly, in this case, each development user may only update the respective master password MPW and the respective security password SPW.

In various embodiments, the failure-analysis life-cycle stage LC4 does not permit access to the password data PWD.

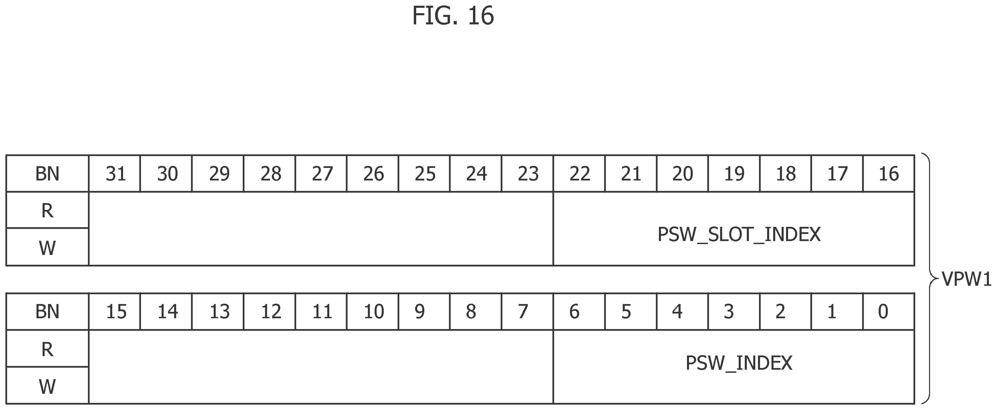

Figure 16 shows a further embodiment of a password verification command VPW. Specifically, in the embodiment considered, at least when specifying a slot number associated with a master password MPW, e.g., via the password index PSW_INDEX, it is also required to specify an index PSW_SLOT_INDEX of a master password MPW or a security password SPW. For example, in the embodiment considered, the bits 22 to 16 of the command VPW1 are used to specify the index PSW_SLOT_INDEX.

Accordingly, in various embodiments, in response to receiving a password verification command VPW for a master password MPW, the password verification circuit 152a and the protection circuit 150a are configured to disable access to all memory slot of the password data PWD, except for the memory slot i (of a master password MPW or security password SPW) of the memory 104a specified via the index PSW_SLOT_INDEX. Specifically, for this memory slot i, the password verification circuit 152a and the protection circuit 150a may be configured to enable the access when also the previously described additional conditions are satisfied. For example, in order to enable write access to the master password MPWO, the password verification command VPW may comprise:
- an index PSW_INDEX indicating a slot number SLOT of the master password MPW0 to be used for the password verification operations, e.g., 0;
- the master password MPW0 as password data PSW; and
- an index PSW_SLOT_INDEX indicating a slot number SLOT of the master password MPW0 in the non-volatile memory, e.g., 0.

For example, in various embodiments, the password verification circuit 152a may be configured to provide for each memory slot i respective overwrite signals, such as OWM1i, OWM2i, and optionally OWM3i. Specifically, in this case, in response to a successful password verification of a given master password, e.g., the master password MPW1, the password verification circuit 152a may assert the overwrite signal associated with the respective master password MPW and the memory slot i indicated by the index PSW_SLOT_INDEX. Alternatively, the protection circuit 150a may receive the index PSW_SLOT_INDEX and enable only the access to the memory slot i as a function of the previous described data.

Accordingly, in various embodiments, the processing system 10a, e.g., via the password verification circuit 152a and the protection circuit 150a, may be configured to execute various operations. Specifically, in response to receiving a password verification command VPW, the processing system 10a may determine whether the received password K corresponds to a master password indicated by the slot index SLOT/password index PSW_ INDEX. Accordingly, in response to receiving an access (e.g., write or read) request CMD to a given memory slot i, the processing system 10a may determine whether the configuration data CD and/or life-cycle data LCD indicate that the access is disabled. In response to determining that the configuration data CD and/or life-cycle data LCD indicate that the access is not disabled, the processing system 10a may execute the access request, e.g., write the data received with a write request CMD to the given memory slot i.

Conversely, in response to determining that the configuration data CD and/or life-cycle data LCD indicate that the access is disabled, the processing system 10a may determine whether the received master password is allowed to enable the access to the given memory slot i, e.g., as a function of the security password access data SPW_CTR.

In various embodiments, when not using the index SPW_SLOT_INDEX, in response to determining that the master password MPW is allowed to enable the access to the given memory slot i, the processing system 10a may already execute the access request, e.g., write the data received with a write request CMD to the given memory slot i of the memory 104a.

Conversely, in various embodiments, when using the index SPW_SLOT_INDEX, the processing system 10a may also determine whether the given memory slot i corresponds to the index SPW_SLOT_INDEX. In this case, the processing system 10a may execute the access request, e.g., write the data received with a write request CMD to the given memory slot i, in response to determining that the master password is allowed to enable the access to the given memory slot i and the given memory slot i corresponds to the index SPW_SLOT_INDEX.

In various embodiments, the password management circuit may be configured to disable to update function of a given master password MPW and the associated security password SPW, when the master password MPW stored to the password repository has a predetermined vale, e.g., when an unprogrammed bit of the memory 104a has the value "1" and the master password MPS has all bits set to "0".

Of course, without prejudice to the principle of the invention, the details of construction and the embodiments may vary widely with respect to what has been described and illustrated herein purely by way of example, without thereby departing from the scope of the present invention, as defined by the ensuing claims.

## Claims

1. A processing system (10a) comprising:
- a non-volatile memory (104a) comprising a memory area arranged to store password data (PWD), wherein said memory area comprise a first memory slot arranged to store a first master password (MPW0), a second memory slot arranged to store a second master password (MPW1) and a third memory slot arranged to store a security password (SPW0);
- a password verification circuit (152a) configured to:
- receive a password verification command (VPW) comprising a password (K, PSW) and a slot number (SLOT, PSW_INDEX),
- determine whether said slot number (SLOT, PSW _INDEX) is associated with said first master password (MPW0) or said second master password (MPW1),
- in response to determining that said slot number (SLOT, PSW_INDEX) is associated with said first master password (MPW0), determine (1522) whether said received password (K, PSW) corresponds to said first master password (MPW0) and, in response to determining that said received password (K, PSW) corresponds to said first master password (MPW0), set an overwrite signal (OW; OWM) to indicate a success verification of said first master password (MPW0), and
- in response to determining that said slot number (SLOT, PSW_INDEX) is associated with said second master password (MPW1), determine (1522) whether said received password (K, PSW) corresponds to said second master password (MPW1) and, in response to determining that said received password (K, PSW) corresponds to said second master password (MPW1), set said overwrite signal (OW; OWM) to indicate a success verification of said second master password (MPW1);
- a protection circuit (150a) configured to:
- receive a write request (CMD) for writing a new security password to said third memory slot arranged to store said security password (SPWO), and
- in a first operating mode (LC3):
- determine whether security access data (SIi, SPW_CTR) indicate that said third memory slot is associated with said first master password (MPW0) or with said second master password (MPW1),
- determine whether said overwrite signal (OW; OWM) indicates a success verification of said first master password (MPW0) or said second master password (MPW1),
- in response to determining that said security access data (SIi, SPW_CTR) indicate that said third memory slot is associated with said first master password (MPW0) and said overwrite signal (OW; OWM) indicates a success verification of said first master password (MPW0), enable the writing of said new security password to said third memory slot,
- in response to determining that said security access data (SIi, SPW_CTR) indicate that said third memory slot is associated with said first master password (MPW0) and said overwrite signal (OW; OWM) does not indicate a success verification of said first master password (MPW0), inhibit the writing of said new security password to said third memory slot,
- in response to determining that said security access data (SIi, SPW_CTR) indicate that said third memory slot is associated with said second master password (MPW1) and said overwrite signal (OW; OWM) indicates a success verification of said second master password (MPW1), enable the writing of said new security password to said third memory slot arranged to store said security password (SPW0).

2. The processing system (10a) according to Claim 1, comprising:
- a password repository (156a);
- a configuration circuit (108) configured to transfer said password data (PWD) from said non-volatile memory (104a) to said password repository (156a);
wherein said password verification circuit (152a) is configured to provide said slot number (SLOT, PSW_INDEX) to said password repository (156a) and receive a respective password associated with the slot number (SLOT, PSW_INDEX) from said password repository (156a).

3. The processing system (10a) according to Claim 1 or Claim 2, wherein said password verification circuit (152a) is configured to:
- determine whether said slot number (SLOT, PSW_INDEX) is associated with said security password (SPWO), and
- in response to determining that said slot number (SLOT, PSW_INDEX) is associated with said security password (SPWO), determine (1522) whether said received password (K, PSW) corresponds to said security password (SPW0) and, in response to determining that said received password (K, PSW) corresponds to said security password (SPWO), set said overwrite signal (OW) to indicate a success verification of said security password (SPW0);
wherein said processing system (10a) comprises a circuit (160) and a further protection circuit (150), wherein said further protection circuit (150) is configured to enable access to said circuit (160) in response to determining that said overwrite signal (OW) indicates a success verification of said security password (SPW0).

4. The processing system (10a) according to any of the previous claims, wherein said protection circuit (150a) comprises a register (1502) providing said security access data (SIi, SPW_CTR), wherein a field (SIi) of said security access data (SPW_CTR) indicates whether said third memory slot arranged to store said security password (SPW0) is associated with said first master password (MPW0), is associated with said second master password (MPW1) or is unassigned, wherein said protection circuit (150a) is configured to:
- receive configuration data (CD) from a configuration circuit (108) of said processing system (10a),
- determine whether said field (SIi) of said security access data (SPW_CTR) indicates that said third memory slot is unassigned, and
- in response to determining that said field (SIi) of said security access data (SPW_CTR) indicates that said third memory slot is unassigned, overwrite the bits of said field (SIi) of said security access data (SPW_CTR) with respective bits of the received configuration data (CD).

5. The processing system (10a) according to Claim 4, wherein said protection circuit (150) has associated an address, wherein said non-volatile memory (104a) comprising a further memory area arranged to store frames of configuration data (CD), each frame of configuration data (CD) comprising an address and respective configuration data, wherein said configuration circuit (108) is configured to:
- sequentially read said frames of configuration data (CD) from said non-volatile memory (104a);
- determine whether the address of a frame of configuration data corresponds to the address associated with said protection circuit (150) and, in response to determining that the address of the frame of configuration data corresponds to the address associated with said protection circuit (150), transmit the configuration data of the frame of configuration data to said protection circuit.

6. The processing system (10a) according to any of the previous claims, wherein said protection circuit (150) is configured to:
- receive a write request (CMD) for writing a new master password to said first memory slot arranged to store said first master password (MPW0), and
- in said first operating mode (LC3):
- determine whether said overwrite signal (OW; OWM) indicates a success verification of said first master password (MPW0),
- in response to determining that said overwrite signal (OW; OWM) indicates a success verification of said first master password (MPW0), enable the writing of said new master password to said first memory slot,
- in response to determining that said overwrite signal (OW; OWM) does not indicate a success verification of said first master password (MPW0), inhibit the writing of said new master password to said first memory slot,

7. The processing system (10a) according to any of the previous claims, wherein said protection circuit (150) is configured to determine the operating mode as a function of life-cycle data (LCD) indicating a life-cycle stage of said processing system (10a) and/or configuration data (CD), wherein said first operating mode preferably corresponds to an in-field life-cycle stage.

8. The processing system (10a) according to any of the previous claims, wherein said protection circuit (150a) is configured to:
- in a second operating mode (LC0), such as a production life-cycle stage, enable write access to said first master password (MPW0), said second master password (MPW1) and said security password (SPW0).

9. The processing system (10a) according to any of the previous claims, wherein said protection circuit (150a) is configured to:
- in a third operating mode (LC1), such as a software development life-cycle stage:
- determine whether said security access data (SIi, SPW_CTR) indicate that said third memory slot is associated with said first master password (MPW0), is associated with said second master password (MPW1) or is unassigned,
- determine whether said overwrite signal (OW; OWM) indicates a success verification of said first master password (MPW0) or said second master password (MPW1),
- in response to determining that said security access data (SIi, SPW_CTR) indicate that said third memory slot is associated with said second master password (MPW1) or is unassigned, enable the writing of said new security password to said third memory slot,
- in response to determining that said security access data (SIi, SPW_CTR) indicate that said third memory slot is associated with said first master password (MPW0) and said overwrite signal (OW; OWM) indicates a success verification of said first master password (MPW0), enable the writing of said new security password to said third memory slot,
- in response to determining that said security access data (SIi, SPW_CTR) indicate that said third memory slot is associated with said first master password (MPW0) and said overwrite signal (OW; OWM) does not indicate a success verification of said first master password (MPW0), inhibit the writing of said new security password to said third memory slot.

10. The processing system (10a) according to any of the previous claims, wherein said overwrite signal (OW; OWM) comprises a first signal (OWMO) and a second signal (OWM1), wherein said password verification circuit (152a) is configured to:
- assert said first signal (OWMO) to indicate a success verification of said first master password (MPW0) and de-assert said first signal (OWMO) to not indicate a success verification of said first master password (MPW0), and
- assert said second signal (OWM1) to indicate a success verification of said second master password (MPW1) and de-assert said second signal (OWM1) to not indicate a success verification of said second master password (MPW1).

11. The processing system (10a) according to any of the previous claims, comprising a processing circuit (102) and/or a communication interface (IF) configured to provide said password verification command (VPW) and said write request (CMD).

12. An integrated circuit, such as a micro-controller, comprising a processing system (10a) according to any of Claims 1 to 11.

13. A device, such as a vehicle, comprising a plurality of processing systems (10a) according to any of Claims 1 to 10 and a communication system (20) for exchanging data between said processing systems (10a).

14. A method of operating a processing system (10a) according to any of Claim 1 to 11, wherein the processing system (10a) comprises a non-volatile memory (104a) comprising a memory area arranged to store password data (PWD), wherein said memory area comprise a first memory slot arranged to store a first master password (MPW0), a second memory slot arranged to store a second master password (MPW1) and a third memory slot arranged to store a security password (SPWO), the method comprising the steps of:
- receiving a password verification command (VPW) comprising a password (K, PSW) and a slot number (SLOT, PSW_INDEX),
- determining whether said slot number (SLOT, PSW_INDEX) is associated with a first master password (MPW0) or a second master password (MPW1),
- in response to determining that said slot number (SLOT, PSW_INDEX) is associated with said first master password (MPW0), determining (1522) whether said received password (K, PSW) corresponds to said first master password (MPW0) and, in response to determining that said received password (K, PSW) corresponds to said first master password (MPW0), setting an overwrite signal (OW; OWM) to indicate a success verification of said first master password (MPW0),
- in response to determining that said slot number (SLOT, PSW_INDEX) is associated with said second master password (MPW1), determining (1522) whether said received password (K, PSW) corresponds to said second master password (MPW1) and, in response to determining that said received password (K, PSW) corresponds to said second master password (MPW1), setting said overwrite signal (OW; OWM) to indicate a success verification of said second master password (MPW1),
- receiving a write request (CMD) for writing a new security password to the third memory slot arranged to store said security password (SPWO),
- determining whether security access data (SIi, SPW_CTR) indicate that said third memory slot is associated with said first master password (MPW0) or with said second master password (MPW1),
- determining whether said overwrite signal (OW; OWM) indicates a success verification of said first master password (MPW0) or said second master password (MPW1),
- in response to determining that said security access data (SIi, SPW_CTR) indicate that said third memory slot is associated with said first master password (MPW0) and said overwrite signal (OW; OWM) indicates a success verification of said first master password (MPW0), enabling the writing of said new security password to said third memory slot,
- in response to determining that said security access data (SIi, SPW_CTR) indicate that said third memory slot is associated with said first master password (MPW0) and said overwrite signal (OW; OWM) does not indicate a success verification of said first master password (MPW0), inhibiting the writing of said new security password to said third memory slot, and
- in response to determining that said security access data (SIi, SPW_CTR) indicate that said third memory slot is associated with said second master password (MPW1) and said overwrite signal (OW; OWM) indicates a success verification of said second master password (MPW1), enabling the writing of said new security password to said third memory slot arranged to store said security password (SPW0).

15. The method according to Claim 14, comprising
- storing a first master password (MPW0) to said first memory slot of said non-volatile memory (104a),
- storing a security password (SPW0) to said third memory slot of said non-volatile memory (104a), and
- setting said security access data (SIi, SPW_CTR) to indicate that said third memory slot is associated with said first master password (MPW0).

## Patentansprüche

1. Verarbeitungssystem (10a), umfassend:
- einen nichtflüchtigen Speicher (104a), der einen Speicherbereich umfasst, der zum Speichern von Passwortdaten (PWD) ausgelegt ist, wobei der Speicherbereich einen ersten Speicherslot, der zum Speichern eines ersten Hauptpassworts (MPW0) ausgelegt ist, einen zweiten Speicherslot, der zum Speichern eines zweiten Hauptpassworts (MPW1) ausgelegt ist, und einen dritten Speicherslot umfasst, der zum Speichern eines Sicherheitspassworts (SPW0) ausgelegt ist;
- eine Passwortüberprüfungsschaltung (152a), die für Folgendes konfiguriert ist:
- Empfangen eines Passwortüberprüfungsbefehls (VPW), der ein Passwort (K, PSW) und eine Slotnummer (SLOT, PSW_INDEX) umfasst,
- Bestimmen, ob die Slotnummer (SLOT, PSW_INDEX) mit dem ersten Hauptpasswort (MPW0) oder dem zweiten Hauptpasswort (MPW1) verknüpft ist,
- als Reaktion auf das Bestimmen, dass die Slotnummer (SLOT, PSW_INDEX) mit dem ersten Hauptpasswort (MPW0) verknüpft ist, Bestimmen (1522), ob das empfangene Passwort (K, PSW) dem ersten Hauptpasswort (MPW0) entspricht, und als Reaktion auf das Bestimmen, dass das empfangene Passwort (K, PSW) dem ersten Hauptpasswort (MPW0) entspricht, Setzen eines Überschreibungssignals (OW; OWM), um eine erfolgreiche Überprüfung des ersten Hauptpassworts (MPW0) anzuzeigen, und
- als Reaktion auf das Bestimmen, dass die Slotnummer (SLOT, PSW_INDEX) mit dem zweiten Hauptpasswort (MPW1) verknüpft ist, Bestimmen (1522), ob das empfangene Passwort (K, PSW) dem zweiten Hauptpasswort (MPW1) entspricht, und als Reaktion auf das Bestimmen, dass das empfangene Passwort (K, PSW) dem zweiten Hauptpasswort (MPW1) entspricht, Setzen des Überschreibungssignals (OW; OWM), um eine erfolgreiche Überprüfung des zweiten Hauptpassworts (MPW1) anzuzeigen;
- eine Schutzschaltung (150a), die für Folgendes konfiguriert ist:
- Empfangen einer Schreibanforderung (CMD) zum Schreiben eines neuen Sicherheitspassworts in den dritten Speicherslot, der zum Speichern des Sicherheitspassworts (SPW0) ausgelegt ist, und
- in einem ersten Betriebsmodus (LC3):
- Bestimmen, ob Sicherheitszugangsdaten (SIi, SPW_CTR) anzeigen, dass der dritte Speicherslot mit dem ersten Hauptpasswort (MPW0) oder mit dem zweiten Hauptpasswort (MPW1) verknüpft ist,
- Bestimmen, ob das Überschreibungssignal (OW; OWM) eine erfolgreiche Überprüfung des ersten Hauptpassworts (MPW0) oder des zweiten Hauptpassworts (MPW1) anzeigt,
- als Reaktion auf das Bestimmen, dass die Sicherheitszugangsdaten (SIi, SPW_CTR) anzeigen, dass der dritte Speicherslot mit dem ersten Hauptpasswort (MPW0) verknüpft ist, und das Überschreibungssignal (OW; OWM) eine erfolgreiche Überprüfung des ersten Hauptpassworts (MPW0) anzeigt, Ermöglichen des Schreibens des neuen Sicherheitspassworts in den dritten Speicherslot,
- als Reaktion auf das Bestimmen, dass die Sicherheitszugangsdaten (SIi, SPW_CTR) anzeigen, dass der dritte Speicherslot mit dem ersten Hauptpasswort (MPW0) verknüpft ist, und das Überschreibungssignal (OW; OWM) keine erfolgreiche Überprüfung des ersten Hauptpassworts (MPW0) anzeigt, Verhindern des Schreibens des neuen Sicherheitspassworts in den dritten Speicherslot,
- als Reaktion auf das Bestimmen, dass die Sicherheitszugangsdaten (SIi, SPW_CTR) anzeigen, dass der dritte Speicherslot mit dem zweiten Hauptpasswort (MPW1) verknüpft ist, und das Überschreibungssignal (OW; OWM) eine erfolgreiche Überprüfung des zweiten Hauptpassworts (MPW1) anzeigt, Ermöglichen des Schreibens des neuen Sicherheitspassworts in den dritten Speicherslot, der zum Speichern des Sicherheitspassworts (SPW0) ausgelegt ist.

2. Verarbeitungssystem (10a) nach Anspruch 1, umfassend:
- einen Passwortspeicher (156a);
- eine Konfigurationsschaltung (108), die so konfiguriert ist, dass sie die Passwortdaten (PWD) von dem nichtflüchtigen Speicher (104a) in den Passwortspeicher (156a) überträgt;
wobei die Passwortüberprüfungsschaltung (152a) so konfiguriert ist, dass sie die Slotnummer (SLOT, PSW_INDEX) dem Passwortspeicher (156a) bereitstellt und ein jeweiliges Passwort empfängt, das mit der Slotnummer (SLOT, PSW_INDEX) aus dem Passwortspeicher (156a) verknüpft ist.

3. Verarbeitungssystem (10a) nach Anspruch 1 oder Anspruch 2, wobei die Passwortüberprüfungsschaltung (152a) für Folgendes konfiguriert ist:
- Bestimmen, ob die Slotnummer (SLOT, PSW_INDEX) mit dem Sicherheitspasswort (SPW0) verknüpft ist, und
- als Reaktion auf das Bestimmen, dass die Slotnummer (SLOT, PSW_INDEX) mit dem Sicherheitspasswort (SPW0) verknüpft ist, Bestimmen (1522), ob das empfangene Passwort (K, PSW) dem Sicherheitspasswort (SPW0) entspricht, und als Reaktion auf das Bestimmen, dass das empfangene Passwort (K, PSW) dem Sicherheitspasswort (SPW0) entspricht, Setzen des Überschreibungssignals (OW), um eine erfolgreiche Überprüfung des Sicherheitspassworts (SPW0) anzuzeigen;
wobei das Verarbeitungssystem (10a) eine Schaltung (160) und eine weitere Schutzschaltung (150) umfasst, wobei die weitere Schutzschaltung (150) so konfiguriert ist, dass sie als Reaktion auf das Bestimmen, dass das Überschreibungssignal (OW) eine erfolgreiche Überprüfung des Sicherheitspassworts (SPW0) anzeigt, den Zugriff auf die Schaltung (160) ermöglicht.

4. Verarbeitungssystem (10a) nach einem der vorherigen Ansprüche, wobei die Schutzschaltung (150a) ein Register (1502) umfasst, das die Sicherheitszugangsdaten (SIi, SPW_CTR) bereitstellt, wobei ein Feld (SIi) der Sicherheitszugangsdaten (SPW_CTR) anzeigt, ob der dritte Speicherslot, der zum Speichern des Sicherheitspassworts (SPW0) ausgelegt ist, mit dem ersten Hauptpasswort (MPW0) verknüpft ist, mit dem zweiten Hauptpasswort (MPW1) verknüpft ist oder nicht zugewiesen ist, wobei die Schutzschaltung (150a) für Folgendes konfiguriert ist:
- Empfangen von Konfigurationsdaten (CD) von einer Konfigurationsschaltung (108) des Verarbeitungssystems (10a),
- Bestimmen, ob das Feld (SIi) der Sicherheitszugangsdaten (SPW_CTR) anzeigt, dass der dritte Speicherslot nicht zugewiesen ist, und
- als Reaktion auf das Bestimmen, dass das Feld (SIi) der Sicherheitszugangsdaten (SPW_CTR) anzeigt, dass der dritte Speicherslot nicht zugewiesen ist, Überschreiben der Bits des Feldes (SIi) der Sicherheitszugangsdaten (SPW_CTR) mit den jeweiligen Bits der empfangenen Konfigurationsdaten (CD).

5. Verarbeitungssystem (10a) nach Anspruch 4, wobei die Schutzschaltung (150) eine Adresse zugeordnet hat, wobei der nichtflüchtige Speicher (104a) einen weiteren Speicherbereich umfasst, der zum Speichern von Rahmen von Konfigurationsdaten (CD) ausgelegt ist, wobei jeder Rahmen von Konfigurationsdaten (CD) eine Adresse und jeweilige Konfigurationsdaten umfasst, wobei die Konfigurationsschaltung (108) für Folgendes konfiguriert ist:
- sequentielles Auslesen der Rahmen von Konfigurationsdatenrahmen (CD) aus dem nichtflüchtigen Speicher (104a);
- Bestimmen, ob die Adresse eines Rahmens von Konfigurationsdaten der Adresse entspricht, die mit der Schutzschaltung (150) verknüpft ist, und als Reaktion auf das Bestimmen, dass die Adresse des Rahmens von Konfigurationsdaten der Adresse entspricht, die mit der Schutzschaltung (150) verknüpft ist, Übertragen der Konfigurationsdaten des Rahmens von Konfigurationsdaten an die Schutzschaltung.

6. Verarbeitungssystem (10a) nach einem der vorherigen Ansprüche, wobei die Schutzschaltung (150) für Folgendes konfiguriert ist:
- Empfangen eines Schreibbefehls (CMD) zum Schreiben eines neuen Hauptpassworts in den ersten Speicherslot, der zum Speichern des ersten Hauptpassworts (MPW0) ausgelegt ist, und
- im ersten Betriebsmodus (LC3):
- Bestimmen, ob das Überschreibungssignal (OW; OWM) eine erfolgreiche Überprüfung des ersten Hauptpassworts (MPW0) anzeigt,
- als Reaktion auf das Bestimmen, dass das Überschreibungssignal (OW; OWM) eine erfolgreiche Überprüfung des ersten Hauptpassworts (MPW0) anzeigt, Ermöglichen des Schreibens des neuen Hauptpassworts in den ersten Speicherslot,
- als Reaktion auf das Bestimmen, dass das Überschreibungssignal (OW; OWM) keine erfolgreiche Überprüfung des ersten Hauptpassworts (MPW0) anzeigt, Verhindern des Schreibens des neuen Hauptpassworts in den ersten Speicherslot,

7. Verarbeitungssystem (10a) nach einem der vorherigen Ansprüche, wobei die Schutzschaltung (150) so konfiguriert ist, dass sie den Betriebsmodus in Abhängigkeit von Lebenszyklusdaten (LCD), die eine Lebenszyklusphase des Verarbeitungssystems (10a) anzeigen, und/oder Konfigurationsdaten (CD) bestimmt, wobei der erste Betriebsmodus vorzugsweise einer Lebenszyklusphase in dem Feld entspricht.

8. Verarbeitungssystem (10a) nach einem der vorherigen Ansprüche, wobei die Schutzschaltung (150a) für Folgendes konfiguriert ist:
- in einem zweiten Betriebsmodus (LC0), wie beispielsweise einer Phase des Produktionslebenszyklus, Ermöglichen des Schreibzugriffs auf das erste Hauptpasswort (MPW0), das zweite Hauptpasswort (MPW1) und das Sicherheitspasswort (SPW0).

9. Verarbeitungssystem (10a) nach einem der vorherigen Ansprüche, wobei die Schutzschaltung (150a) für Folgendes konfiguriert ist:
- in einem dritten Betriebsmodus (LC1), wie beispielsweise einer Phase des Softwareentwicklungslebenszyklus:
- Bestimmen, ob die Sicherheitszugangsdaten (SIi, SPW_CTR) anzeigen, dass der dritte Speicherslot mit dem ersten Hauptpasswort (MPW0) verknüpft ist, mit dem zweiten Hauptpasswort (MPW1) verknüpft ist oder nicht zugewiesen ist,
- Bestimmen, ob das Überschreibungssignal (OW; OWM) eine erfolgreiche Überprüfung des ersten Hauptpassworts (MPW0) oder des zweiten Hauptpassworts (MPW1) anzeigt,
- als Reaktion auf das Bestimmen, dass die Sicherheitszugangsdaten (SIi, SPW_CTR) anzeigen, dass der dritte Speicherslot mit dem zweiten Hauptpasswort (MPW1) verknüpft ist oder nicht zugewiesen ist, Ermöglichen des Schreibens des neuen Sicherheitspassworts in den dritten Speicherslot,
- als Reaktion auf das Bestimmen, dass die Sicherheitszugangsdaten (SIi, SPW_CTR) anzeigen, dass der dritte Speicherslot mit dem ersten Hauptpasswort (MPW0) verknüpft ist, und das Überschreibungssignal (OW; OWM) eine erfolgreiche Überprüfung des ersten Hauptpassworts (MPW0) anzeigt, Ermöglichen des Schreibens des neuen Sicherheitspassworts in den dritten Speicherslot,
- als Reaktion auf das Bestimmen, dass die Sicherheitszugangsdaten (SIi, SPW_CTR) anzeigen, dass der dritte Speicherslot mit dem ersten Hauptpasswort (MPW0) verknüpft ist, und das Überschreibungssignal (OW; OWM) keine erfolgreiche Überprüfung des ersten Hauptpassworts (MPW0) anzeigt, Verhindern des Schreibens des neuen Sicherheitspassworts in den dritten Speicherslot.

10. Verarbeitungssystem (10a) nach einem der vorherigen Ansprüche, wobei das Überschreibungssignal (OW; OWM) ein erstes Signal (OWM0) und ein zweites Signal (OWM1) umfasst, wobei die Passwortüberprüfungsschaltung (152a) für Folgendes konfiguriert ist:
- Aktivieren des ersten Signals (OWM0), um eine erfolgreiche Überprüfung des ersten Hauptpassworts (MPW0) anzuzeigen, und Deaktivieren des ersten Signals (OWM0), um keine erfolgreiche Überprüfung des ersten Hauptpassworts (MPW0) anzuzeigen, und
- Aktivieren des zweiten Signals (OWM1), um eine erfolgreiche Überprüfung des zweiten Hauptpassworts (MPW1) anzuzeigen, und Deaktivieren des zweiten Signals (OWM1), um keine erfolgreiche Überprüfung des zweiten Hauptpassworts (MPW1) anzuzeigen.

11. Verarbeitungssystem (10a) nach einem der vorherigen Ansprüche, das eine Verarbeitungsschaltung (102) und/oder eine Kommunikationsschnittstelle (IF) umfasst, die so konfiguriert ist, dass sie den Passwortüberprüfungsbefehl (VPW) und die Schreibanforderung (CMD) bereitstellt.

12. Integrierte Schaltung, wie beispielsweise ein Mikrocontroller, umfassend ein Verarbeitungssystem (10a) nach einem der Ansprüche 1 bis 11.

13. Vorrichtung, wie beispielsweise ein Fahrzeug, umfassend eine Vielzahl von Verarbeitungssystemen (10a) nach einem der Ansprüche 1 bis 10 und ein Kommunikationssystem (20) zum Austauschen von Daten zwischen den Verarbeitungssystemen (10a).

14. Verfahren zum Betreiben eines Verarbeitungssystems (10a) nach einem der Ansprüche 1 bis 11, wobei das Verarbeitungssystem (10a) einen nichtflüchtigen Speicher (104a) umfasst, der einen Speicherbereich umfasst, der zum Speichern von Passwortdaten (PWD) ausgelegt ist, wobei der Speicherbereich einen ersten Speicherslot, der zum Speichern eines ersten Hauptpassworts (MPW0) ausgelegt ist, einen zweiten Speicherslot, der zum Speichern eines zweiten Hauptpassworts (MPW1) ausgelegt ist, und einen dritten Speicherslot umfasst, der zum Speichern eines Sicherheitspassworts (SPW0) ausgelegt ist, wobei das Verfahren die folgenden Schritte umfasst:
- Empfangen eines Passwortüberprüfungsbefehls (VPW), der ein Passwort (K, PSW) und eine Slotnummer (SLOT, PSW_INDEX) umfasst,
- Bestimmen, ob die Slotnummer (SLOT, PSW_INDEX) mit einem ersten Hauptpasswort (MPW0) oder einem zweiten Hauptpasswort (MPW1) verknüpft ist,
- als Reaktion auf das Bestimmen, dass die Slotnummer (SLOT, PSW_INDEX) mit dem ersten Hauptpasswort (MPW0) verknüpft ist, Bestimmen (1522), ob das empfangene Passwort (K, PSW) dem ersten Hauptpasswort (MPW0) entspricht, und als Reaktion auf das Bestimmen, dass das empfangene Passwort (K, PSW) dem ersten Hauptpasswort (MPW0) entspricht, Setzen eines Überschreibungssignals (OW; OWM), um eine erfolgreiche Überprüfung des ersten Hauptpassworts (MPW0) anzuzeigen,
- als Reaktion auf das Bestimmen, dass die Slotnummer (SLOT, PSW_INDEX) mit dem zweiten Hauptpasswort (MPW1) verknüpft ist, Bestimmen (1522), ob das empfangene Passwort (K, PSW) dem zweiten Hauptpasswort (MPW1) entspricht, und als Reaktion auf das Bestimmen, dass das empfangene Passwort (K, PSW) dem zweiten Hauptpasswort (MPW1) entspricht, Setzen des Überschreibungssignals (OW; OWM), um eine erfolgreiche Überprüfung des zweiten Hauptpassworts (MPW1) anzuzeigen,
- Empfangen einer Schreibanforderung (CMD) zum Schreiben eines neuen Sicherheitspassworts in den dritten Speicherslot, der zum Speichern des Sicherheitspassworts (SPW0) ausgelegt ist,
- Bestimmen, ob Sicherheitszugangsdaten (SIi, SPW_CTR) anzeigen, dass der dritte Speicherslot mit dem ersten Hauptpasswort (MPW0) oder mit dem zweiten Hauptpasswort (MPW1) verknüpft ist,
- Bestimmen, ob das Überschreibungssignal (OW; OWM) eine erfolgreiche Überprüfung des ersten Hauptpassworts (MPW0) oder des zweiten Hauptpassworts (MPW1) anzeigt,
- als Reaktion auf das Bestimmen, dass die Sicherheitszugangsdaten (SIi, SPW_CTR) anzeigen, dass der dritte Speicherslot mit dem ersten Hauptpasswort (MPW0) verknüpft ist, und das Überschreibungssignal (OW; OWM) eine erfolgreiche Überprüfung des ersten Hauptpassworts (MPW0) anzeigt, Ermöglichen des Schreibens des neuen Sicherheitspassworts in den dritten Speicherslot,
- als Reaktion auf das Bestimmen, dass die Sicherheitszugangsdaten (SIi, SPW_CTR) anzeigen, dass der dritte Speicherslot mit dem ersten Hauptpasswort (MPW0) verknüpft ist, und das Überschreibungssignal (OW; OWM) keine erfolgreiche Überprüfung des ersten Hauptpassworts (MPW0) anzeigt, Verhindern des Schreibens des neuen Sicherheitspassworts in den dritten Speicherslot, und
- als Reaktion auf das Bestimmen, dass die Sicherheitszugangsdaten (SIi, SPW_CTR) anzeigen, dass der dritte Speicherslot mit dem zweiten Hauptpasswort (MPW1) verknüpft ist, und das Überschreibungssignal (OW; OWM) eine erfolgreiche Überprüfung des zweiten Hauptpassworts (MPW1) anzeigt, Ermöglichen des Schreibens des neuen Sicherheitspassworts in den dritten Speicherslot, der zum Speichern des Sicherheitspassworts (SPW0) ausgelegt ist.

15. Verfahren nach Anspruch 14, umfassend
- Speichern eines ersten Hauptpassworts (MPW0) in dem ersten Speicherslot des nichtflüchtigen Speichers (104a),
- Speichern eines Sicherheitspassworts (SPW0) in dem dritten Speicherslot des nichtflüchtigen Speichers (104a), und
- Bestimmen der Sicherheitszugangsdaten (SIi, SPW_CTR), um anzuzeigen, dass der dritte Speicherslot mit dem ersten Hauptpasswort (MPW0) verknüpft ist.

## Revendications

1. Système de traitement (10a) comprenant :
- une mémoire non volatile (104a) comprenant une zone de mémoire agencée pour mémoriser des données de mot de passe (PWD), dans laquelle ladite zone de mémoire comprend un premier banc de mémoire agencé pour mémoriser un premier mot de passe maître (MPW0), un deuxième banc de mémoire agencé pour mémoriser un deuxième mot de passe maître (MPW1) et un troisième banc de mémoire agencé pour mémoriser un mot de passe de sécurité (SPW0) ;
- un circuit de vérification de mot de passe (152a) configuré pour :
- recevoir une commande de vérification de mot de passe (VPW) comprenant un mot de passe (K, PSW) et un numéro de banc (SLOT, PSW_INDEX),
- déterminer si ledit numéro de banc (SLOT, PSW_INDEX) est associé audit premier mot de passe maître (MPW0) ou audit deuxième mot de passe maître (MPW1),
- s'il est déterminé que ledit numéro de banc (SLOT, PSW_INDEX) est associé audit premier mot de passe maître (MPW0), déterminer (1522) si ledit mot de passe reçu (K, PSW) correspond audit premier mot de passe maître (MPW0) et, s'il est déterminé que ledit mot de passe reçu (K, PSW) correspond audit premier mot de passe maître (MPW0), déclencher un signal d'écrasement (OW ; OWM) pour indiquer une vérification réussie dudit premier mot de passe maître (MPW0), et
- s'il est déterminé que ledit numéro de banc (SLOT, PSW_INDEX) est associé audit deuxième mot de passe maître (MPW1), déterminer (1522) si ledit mot de passe reçu (K, PSW) correspond audit deuxième mot de passe maître (MPW1) et, s'il est déterminé que ledit mot de passe reçu (K, PSW) correspond audit deuxième mot de passe maître (MPW1), déclencher ledit signal d'écrasement (OW ; OWM) pour indiquer une vérification réussie dudit deuxième mot de passe maître (MPW1) ;
- un circuit de protection (150a) configuré pour :
- recevoir une demande d'écriture (CMD) pour écrire un nouveau mot de passe de sécurité dans ledit troisième banc de mémoire agencé pour mémoriser ledit mot de passe de sécurité (SPW0), et
- dans un premier mode de fonctionnement (LC3) :
- déterminer si des données d'accès de sécurité (SIi, SPW_CTR) indiquent que ledit troisième banc de mémoire est associé audit premier mot de passe maître (MPW0) ou audit deuxième mot de passe maître (MPW1),
- déterminer si ledit signal d'écrasement (OW ; OWM) indique une vérification réussie dudit premier mot de passe maître (MPW0) ou dudit deuxième mot de passe maître (MPW1),
- s'il est déterminé que lesdites données d'accès de sécurité (SIi, SPW_CTR) indiquent que ledit troisième banc de mémoire est associé audit premier mot de passe maître (MPW0) et que ledit signal d'écrasement (OW ; OWM) indique une vérification réussie dudit premier mot de passe maître (MPW0), autoriser l'écriture dudit nouveau mot de passe de sécurité dans ledit troisième banc de mémoire,
- s'il est déterminé que lesdites données d'accès de sécurité (SIi, SPW_CTR) indiquent que ledit troisième banc de mémoire est associé audit premier mot de passe maître (MPW0) et que ledit signal d'écrasement (OW ; OWM) n'indique pas une vérification réussie dudit premier mot de passe maître (MPW0), empêcher l'écriture dudit nouveau mot de passe de sécurité dans ledit troisième banc de mémoire,
- s'il est déterminé que lesdites données d'accès de sécurité (SIi, SPW_CTR) indiquent que ledit troisième banc de mémoire est associé audit deuxième mot de passe maître (MPW1) et que ledit signal d'écrasement (OW ; OWM) indique une vérification réussie dudit deuxième mot de passe maître (MPW1), autoriser l'écriture dudit nouveau mot de passe de sécurité dans ledit troisième banc de mémoire agencé pour mémoriser ledit mot de passe de sécurité (SPW0).

2. Système de traitement (10a) selon la revendication 1, comprenant :
- un dépôt de mot de passe (156a) ;
- un circuit de configuration (108) configuré pour transférer lesdites données de mot de passe (PWD) de ladite mémoire non volatile (104a) audit dépôt de mot de passe (156a) ;
dans lequel ledit circuit de vérification de mot de passe (152a) est configuré pour fournir ledit numéro de banc (SLOT, PSW_INDEX) audit dépôt de mot de passe (156a) et pour recevoir dudit dépôt de mot de passe (156a) un mot de passe respectif associé au numéro de banc (SLOT, PSW_INDEX).

3. Système de traitement (10a) selon la revendication 1 ou 2, dans lequel ledit circuit de vérification de mot de passe (152a) est configuré pour :
- déterminer si ledit numéro de banc (SLOT, PSW_INDEX) est associé audit mot de passe de sécurité (SPW0), et
- s'il est déterminé que ledit numéro de banc (SLOT, PSW_INDEX) est associé audit mot de passe de sécurité (SPW0), déterminer (1522) si ledit mot de passe reçu (K, PSW) correspond audit mot de passe de sécurité (SPW0) et, s'il est déterminé que ledit mot de passe reçu (K, PSW) correspond audit mot de passe de sécurité (SPW0), déclencher ledit signal d'écrasement (OW) pour indiquer une vérification réussie dudit mot de passe de sécurité (SPW0) ;
dans lequel ledit système de traitement (10a) comprend un circuit (160) et un autre circuit de protection (150), ledit autre circuit de protection (150) étant configuré pour permettre l'accès audit circuit (160) s'il est déterminé que ledit signal d'écrasement (OW) indique une vérification réussie dudit mot de passe de sécurité (SPW0).

4. Système de traitement (10a) selon l'une quelconque des revendications précédentes, dans lequel ledit circuit de protection (150a) comprend un registre (1502) fournissant lesdites données d'accès de sécurité (SIi, SPW_CTR), dans lequel un champ (SIi) desdites données d'accès de sécurité (SPW_CTR) indique si ledit troisième banc de mémoire agencé pour mémoriser ledit mot de passe de sécurité (SPW0) est associé audit premier mot de passe maître (MPW0), est associé audit deuxième mot de passe maître (MPW1) ou est non affecté, dans lequel ledit circuit de protection (150a) est configuré pour :
- recevoir des données de configuration (CD) d'un circuit de configuration (108) dudit système de traitement (10a),
- déterminer si ledit champ (SIi) desdites données d'accès de sécurité (SPW_CTR) indique que ledit troisième banc de mémoire est non affecté, et
- s'il est déterminé que ledit champ (SIi) desdites données d'accès de sécurité (SPW_CTR) indique que ledit troisième banc de mémoire est non affecté, écraser les bits dudit champ (SIi) desdites données d'accès de sécurité (SPW_CTR) avec des bits respectifs des données de configuration reçues (CD).

5. Système de traitement (10a) selon la revendication 4, dans lequel ledit circuit de protection (150) est associé à une adresse, dans lequel ladite mémoire non volatile (104a) comprend une autre zone de mémoire agencée pour mémoriser des trames de données de configuration (CD), chaque trame de données de configuration (CD) comprenant une adresse et des données de configuration respectives, dans lequel ledit circuit de configuration (108) est configuré pour :
- lire de façon séquentielle lesdites trame de données de configuration (CD) dans ladite mémoire non volatile (104a) ;
- déterminer si l'adresse d'une trame de données de configuration correspond à l'adresse associée audit circuit de protection (150) et, s'il est déterminé que l'adresse de la trame de données de configuration correspond à l'adresse associée audit circuit de protection (150), transmettre les données de configuration de la trame de données de configuration audit circuit de protection.

6. Système de traitement (10a) selon l'une quelconque des revendications précédentes, dans lequel ledit circuit de protection (150) est configuré pour :
- recevoir une demande d'écriture (CMD) pour écrire un nouveau mot de passe maître dans ledit premier banc de mémoire agencé pour mémoriser ledit premier mot de passe maître (MPW0), et
- dans ledit premier mode de fonctionnement (LC3) :
- déterminer si ledit signal d'écrasement (OW ; OWM) indique une vérification réussie dudit premier mot de passe maître (MPW0),
- s'il est déterminé que ledit signal d'écrasement (OW ; OWM) indique une vérification réussie dudit premier mot de passe maître (MPW0), autoriser l'écriture dudit nouveau mot de passe maître dans ledit premier banc de mémoire,
- s'il est déterminé que ledit signal d'écrasement (OW ; OWM) n'indique pas une vérification réussie dudit premier mot de passe maître (MPW0), empêcher l'écriture dudit nouveau mot de passe maître dans ledit premier banc de mémoire.

7. Système de traitement (10a) selon l'une quelconque des revendications précédentes, dans lequel ledit circuit de protection (150) est configuré pour déterminer le mode de fonctionnement en fonction de données de cycle de vie (LCD) indiquant une étape de cycle de vie dudit système de traitement (10a) et/ou de données de configuration (CD), dans lequel ledit premier mode de fonctionnement correspond de préférence à une étape de cycle de vie sur site.

8. Système de traitement (10a) selon l'une quelconque des revendications précédentes, dans lequel ledit circuit de protection (150a) est configuré pour :
- dans un deuxième mode de fonctionnement (LC0), comme une étape de cycle de vie de production, autoriser l'accès en écriture audit premier mot de passe maître (MPW0), audit deuxième mot de passe maître (MPW1) et audit mot de passe de sécurité (SPW0).

9. Système de traitement (10a) selon l'une quelconque des revendications précédentes, dans lequel ledit circuit de protection (150a) est configuré pour :
- dans un troisième mode de fonctionnement (LC1), comme une étape de cycle de vie de développement logiciel :
- déterminer si lesdites données d'accès de sécurité (SIi, SPW_CTR) indiquent que ledit troisième banc de mémoire est associé audit premier mot de passe maître (MPW0), est associé audit deuxième mot de passe maître (MPW1) ou est non affecté,
- déterminer si ledit signal d'écrasement (OW ; OWM) indique une vérification réussie dudit premier mot de passe maître (MPW0) ou dudit deuxième mot de passe maître (MPW1),
- s'il est déterminé que lesdites données d'accès de sécurité (SIi, SPW_CTR) indiquent que ledit troisième banc de mémoire est associé audit deuxième mot de passe maître (MPW1) ou est non affecté, autoriser l'écriture dudit nouveau mot de passe de sécurité dans ledit troisième banc de mémoire,
- s'il est déterminé que lesdites données d'accès de sécurité (SIi, SPW_CTR) indiquent que ledit troisième banc de mémoire est associé audit premier mot de passe maître (MPW0) et que ledit signal d'écrasement (OW ; OWM) indique une vérification réussie dudit premier mot de passe maître (MPW0), autoriser l'écriture dudit nouveau mot de passe de sécurité dans ledit troisième banc de mémoire,
- s'il est déterminé que lesdites données d'accès de sécurité (SIi, SPW_CTR) indiquent que ledit troisième banc de mémoire est associé audit premier mot de passe maître (MPW0) et que ledit signal d'écrasement (OW ; OWM) n'indique pas une vérification réussie dudit premier mot de passe maître (MPW0), empêcher l'écriture dudit nouveau mot de passe de sécurité dans ledit troisième banc de mémoire.

10. Système de traitement (10a) selon l'une quelconque des revendications précédentes, dans lequel ledit signal d'écrasement (OW ; OWM) comprend un premier signal (OWM0) et un deuxième signal (OWM1), dans lequel ledit circuit de vérification de mot de passe (152a) est configuré pour :
- activer ledit premier signal (OWM0) pour indiquer une vérification réussie dudit premier mot de passe maître (MPW0) et désactiver ledit premier signal (OWM0) pour ne pas indiquer une vérification réussie dudit premier mot de passe maître (MPW0), et
- activer ledit deuxième signal (OWM1) pour indiquer une vérification réussie dudit deuxième mot de passe maître (MPW1) et désactiver ledit deuxième signal (OWM1) pour ne pas indiquer une vérification réussie dudit deuxième mot de passe maître (MPW1).

11. Système de traitement (10a) selon l'une quelconque des revendications précédentes, comprenant un circuit de traitement (102) et/ou une interface de communication (IF) configuré(e) pour fournir ladite commande de vérification de mot de passe (VPW) et ladite demande d'écriture (CMD).

12. Circuit intégré, tel qu'un microcontrôleur, comprenant un système de traitement (10a) selon l'une quelconque des revendications 1 à 11.

13. Dispositif, tel qu'un véhicule, comprenant une pluralité de systèmes de traitement (10a) selon l'une quelconque des revendications 1 à 10 et un système de communication (20) pour échanger des données entre lesdits systèmes de traitement (10a).

14. Procédé de mise en œuvre d'un système de traitement (10a) selon l'une quelconque des revendications 1 à 11, dans lequel le système de traitement (10a) comprend une mémoire non volatile (104a) comprenant une zone de mémoire agencée pour mémoriser des données de mot de passe (PWD), dans laquelle ladite zone de mémoire comprend un premier banc de mémoire agencé pour mémoriser un premier mot de passe maître (MPW0), un deuxième banc de mémoire agencé pour mémoriser un deuxième mot de passe maître (MPW1) et un troisième banc de mémoire agencé pour mémoriser un mot de passe de sécurité (SPW0), le procédé comprenant les étapes suivantes :
- recevoir une commande de vérification de mot de passe (VPW) comprenant un mot de passe (K, PSW) et un numéro de banc (SLOT, PSW_INDEX),
- déterminer si ledit numéro de banc (SLOT, PSW_INDEX) est associé à un premier mot de passe maître (MPW0) ou à un deuxième mot de passe maître (MPW1),
- s'il est déterminé que ledit numéro de banc (SLOT, PSW_INDEX) est associé audit premier mot de passe maître (MPW0), déterminer (1522) si ledit mot de passe reçu (K, PSW) correspond audit premier mot de passe maître (MPW0) et, s'il est déterminé que ledit mot de passe reçu (K, PSW) correspond audit premier mot de passe maître (MPW0), déclencher un signal d'écrasement (OW ; OWM) pour indiquer une vérification réussie dudit premier mot de passe maître (MPW0),
- s'il est déterminé que ledit numéro de banc (SLOT, PSW_INDEX) est associé audit deuxième mot de passe maître (MPW1), déterminer (1522) si ledit mot de passe reçu (K, PSW) correspond audit deuxième mot de passe maître (MPW1) et, s'il est déterminé que ledit mot de passe reçu (K, PSW) correspond audit deuxième mot de passe maître (MPW1), déclencher ledit signal d'écrasement (OW ; OWM) pour indiquer une vérification réussie dudit deuxième mot de passe maître (MPW1),
- recevoir une demande d'écriture (CMD) pour écrire un nouveau mot de passe de sécurité dans ledit troisième banc de mémoire agencé pour mémoriser ledit mot de passe de sécurité (SPW0),
- déterminer si des données d'accès de sécurité (SIi, SPW_CTR) indiquent que ledit troisième banc de mémoire est associé audit premier mot de passe maître (MPW0) ou audit deuxième mot de passe maître (MPW1),
- déterminer si ledit signal d'écrasement (OW ; OWM) indique une vérification réussie dudit premier mot de passe maître (MPW0) ou dudit deuxième mot de passe maître (MPW1),
- s'il est déterminé que lesdites données d'accès de sécurité (SIi, SPW_CTR) indiquent que ledit troisième banc de mémoire est associé audit premier mot de passe maître (MPW0) et que ledit signal d'écrasement (OW ; OWM) indique une vérification réussie dudit premier mot de passe maître (MPW0), autoriser l'écriture dudit nouveau mot de passe de sécurité dans ledit troisième banc de mémoire,
- s'il est déterminé que lesdites données d'accès de sécurité (SIi, SPW_CTR) indiquent que ledit troisième banc de mémoire est associé audit premier mot de passe maître (MPW0) et que ledit signal d'écrasement (OW ; OWM) n'indique pas une vérification réussie dudit premier mot de passe maître (MPW0), empêcher l'écriture dudit nouveau mot de passe de sécurité dans ledit troisième banc de mémoire, et
- s'il est déterminé que lesdites données d'accès de sécurité (SIi, SPW_CTR) indiquent que ledit troisième banc de mémoire est associé audit deuxième mot de passe maître (MPW1) et que ledit signal d'écrasement (OW ; OWM) indique une vérification réussie dudit deuxième mot de passe maître (MPW1), autoriser l'écriture dudit nouveau mot de passe de sécurité dans ledit troisième banc de mémoire agencé pour mémoriser ledit mot de passe de sécurité (SPW0).

15. Procédé selon la revendication 14, comprenant les étapes suivantes :
- mémoriser un premier mot de passe maître (MPW0) dans ledit premier banc de mémoire de ladite mémoire non volatile (104a),
- mémoriser un mot de passe de sécurité (SPW0) dans ledit troisième banc de mémoire de ladite mémoire non volatile (104a), et
- régler lesdites données d'accès de sécurité (SIi, SPW_CTR) pour indiquer que ledit troisième banc de mémoire est associé audit premier mot de passe maître (MPW0).
